# EUROPÄISCHE PATENTSCHRIFT

(11) **EP 3 742 034 B1**
(45) Veröffentlichungstag und Bekanntmachung des Hinweises auf die Patenterteilung: **18.10.2023**
(21) Anmeldenummer: 20175968.5
(22) Anmeldetag: 22.05.2020
(51) Int. Cl.: F16L 19/028, F16L 33/22, F16L 37/14, F16L 11/15, F16L 33/28, F16L 33/00, E03C 1/02, F16L 47/04, F16L 15/00

(54) **SCHLAUCHANORDNUNG UND VERWENDUNG**
HOSE ASSEMBLY AND USE
AGENCEMENT DE TUYAU ET UTILISATION

(30) Priorität: 23.05.2019 DE 102019003605
(43) Veröffentlichungstag der Anmeldung: 25.11.2020
(73) Patentinhaber: UNIWELL Rohrsysteme GmbH & Co. KG, 96106 Ebern (DE)
(72) Erfinder: Meyer, Hans-Peter, 58675 Hemer (DE)
(74) Vertreter: Weyers, Christopher

(56) Entgegenhaltungen:
- EP-A1- 2 431 515
- WO-A1-2018/162441
- DE-U1-202005 019 175
- DE-U1-202017 105 078
- US-A- 4 453 747

## Beschreibung

Die vorliegende Erfindung betrifft eine Schlauchanordnung für ein wasserführendes System zur Trinkwasserleitung in einem trinkwasserführenden System sowie eine Verwendung.

Im Rahmen der Installation wasserführender Systeme, insbesondere in oder für Sanitärarmaturen, kommen Schlauchanordnungen zum Einsatz. Eine übliche Schlauchanordnung weist hierbei einen Schlauch auf, an dessen beiden Schlauchenden jeweils ein Anschlussstück bzw. Anschlussfitting vorgesehen ist. Die Anschlussstücke bzw. -fittings dienen dazu, die Schlauchanordnung an eine Wasserversorgung und/oder einen Abnehmer, beispielsweise eine Sanitärarmatur, anzuschließen. Die Anschlussstücke bzw. -fittings werden hierbei üblicherweise teilweise in das jeweilige Schlauchende eingesteckt und durch Verpressen am Schlauch befestigt. Der Schlauch wird also üblicherweise auf das Anschlussstück aufgepresst.

Die EP 2 159 465 B1 zeigt eine solche Schlauchanordnung, bei der das Anschlussstück einen Anschlussstutzen aufweist, der in ein Schlauchende des Schlauchs eingesteckt wird. Zur kraftschlüssigen Verbindung des Schlauchs mit dem Anschlussstück wird das entsprechende Schlauchende auf das Anschlussstück aufgepresst, wozu eine Presshülse verwendet wird. Die Presshülse wird dabei von außen auf den Schlauch aufgepresst.

Die DE 196 54 435 A1 zeigt eine Schlauchanordnung, bei der ein Fitting einen Stützkörper aufweist, der in ein Schlauchende eingesteckt wird. Ein Verpressen von Schlauch und Fitting erfolgt hier mittels eines Spannrings und einer Überwurfmutter.

Nachteilig an derartigen Schlauchanordnungen ist, dass durch das Anschlussstück der Strömungsquerschnitt der Schlauchanordnung verringert wird. Da das Anschlussstück in das Schlauchende eingesteckt wird, verringert sich der Strömungsquerschnitt zwangsläufig im Vergleich zum Strömungsquerschnitt des Schlauchendes ohne Anschlussstück. Infolgedessen findet eine Beschleunigung des Wasserstroms bzw. eine Reduzierung des Wasserdrucks im Bereich des Anschlussstücks statt, sodass eine Wasserentnahme nur bei einem verringerten Wasserdruck möglich ist. Darüber hinaus ist die vorgenannte Querschnittsverengung im Bereich des Anschlussstücks bzw. des Schlauchendes mit einer Reduzierung der maximalen Durchflussmenge der Schlauchanordnung verbunden.

Zudem wird durch eine Befestigung des Anschlussstücks durch Verpressen, wie beispielsweise in der EP 1 259 465 B1 und DE 196 54 435 A1 beschrieben, der Schlauch infolge des Pressvorgangs einer erheblichen radial nach innen gerichteten Druckkraft ausgesetzt, sodass der Schlauch im Verbindungsbereich mit dem Anschlussstück irreversibel zusammengedrückt wird, einhergehend mit einer noch weiteren Querschnittsverengung im Bereich des Anschlussstücks.

Was das Material des Anschlussstücks anbelangt, so wird im Stand der Technik üblicherweise auf Metalllegierungen zurückgegriffen, beispielsweise Messing wie in der DE 196 54 435 A1 beschrieben. Nachteilig an dieser Materialwahl sind die vergleichsweise hohen Rohstoffkosten, die sich negativ auf den Produktpreis und somit auf die Akzeptanz am Absatzmarkt auswirken. Zu berücksichtigen ist dabei, dass metallische Legierungen eine mitunter spekulative Geldanlage darstellen, einhergehend mit zum Teil erheblichen Preisschwankungen. Diese Preisinstabilität metallischer Rohstoffe wirkt sich auch negativ auf die Produktionskosten und letztlich den Produktpreis am Absatzmarkt aus.

Zusätzlich zu den vorgenannten wirtschaftlichen Nachteilen ist aus fertigungstechnischer Sicht zu beachten, dass Anschlussstücke aus metallischen Legierungen einer aufwendigen materialabtragenden Bearbeitung bedürfen. Zu berücksichtigen ist dabei, dass Sanitärarmaturen oftmals herstellerspezifische Anschlussstücke mit unterschiedlichen Anschlussgeometrien aufweisen. Entsprechend müssen auch die Anschlussstücke individuell an die herstellerspezifisch vorgegebenen komplementären Anschlussgeometrien angepasst werden, was zeit- und kostenintensiv ist.

Die DE 10 2017 002 275 A1 und WO 2018/162441 A1 umgehen die oben beschriebene Problematik indem am Schlauchende ein einstückig mit dem Schlauch gebildetes Anschlussstück aus Kunststoff vorgesehen ist, das direkt zur Verbindung mit einem komplementär ausgebildeten Anschlussteil, beispielsweise einer Sanitärarmatur, ausgebildet ist. Die Herstellung des Schlauchs mit Anschlussstück erfolgt insbesondere in einem gemeinsamen Extrusionsprozess.

Problematisch ist hierbei, dass, wie weiter oben erwähnt, oftmals herstellerspezifische Anschlussstücke mit unterschiedlichen Anschlussgeometrien notwendig sind.

Es ist zwar möglich, eine materialabtragende Bearbeitung durch den in der DE 10 2017 002 275 A1 bzw. WO 2018/162441 A1 beschriebenen Herstellungsprozess zu vermeiden, jedoch müssen auch hier die Anschlussstücke individuell an die herstellerspezifisch vorgegebenen komplementären Anschlussgeometrien angepasst werden. Da die Anschlussstücke in einem gemeinsamen Extrusionprozess mit dem Schlauch hergestellt werden, ist also für eine bestimmte Anschlussgeometrie jeweils ein individueller Schlauch herzustellen. Es ist also nicht möglich, einen universellen Schlauch herzustellen, der dann durch Verbinden mit unterschiedlichen Anschlussstücken an unterschiedliche Anschlussgeometrien angepasst werden kann.

Die EP 2 431 515 A1 betrifft einen Ablaufschlauch für ein wassergespeistes Haushaltsgerät, insbesondere eine Waschmaschine oder Geschirrspülmaschine. Das Haushaltsgerät weist an seiner Gehäusewand einen Ablaufstutzen auf, an den der Ablaufschlauch anschließbar ist. Der Ablaufschlauch weist eine Anschlusshülse auf, die mittels eines Steckelements, wie einer klammerartigen Scheibe werkzeuglos an dem geräteseitigen Ablaufstutzen festlegbar ist.

Die DE 20 2005 019175 U1 betrifft eine Vorrichtung zum schnellen Anschließen von Schläuchen für Waschmaschinen und ähnliche Geräte. Die Vorrichtung weist einen Anschlussstutzen an einem elektrischen Haushaltsgerät sowie ein röhrenförmiges Anschlussstück auf. Das Anschlussstück ist mit einem Schlauch verbunden und kann mit einer einrastenden Kupplung in den Stutzen eingeführt werden. An dem Stutzen ist ein elastisches, C-förmiges Element mit einem Sperrabschnitt angebracht, um das Abrutschen von dem Stutzen zu verhindern.

Vor diesem Hintergrund liegt daher der vorliegenden Erfindung die Aufgabe zugrunde, eine Schlauchanordnung, sowie eine Verwendung anzugeben, wobei sich die Schlauchanordnung, insbesondere auch für unterschiedliche Anschlussgeometrien, in einfacher Weise und kostengünstig fertigen und/oder universell einsetzen lässt und insbesondere ein optimales Strömungsverhalten aufweist.

Die vorgenannte Aufgabe wird durch eine Schlauchanordnung gemäß Anspruch 1 oder eine Verwendung gemäß Anspruch 11 gelöst. Vorteilhafte Weiterbildungen sind Gegenstand der Unteransprüche.

Die vorschlagsgemäße Schlauchanordnung weist einen Schlauch und einen Adapter auf. Der Adapter hat eine Aufnahme, in die ein erstes Schlauchende des Schlauchs vollständig oder zumindest teilweise eingesteckt und/oder aufgenommen werden kann.

Der Adapter ist gegen Trennen vom Schlauch gesichert oder sicherbar. Hierzu ist vom Schlauch, insbesondere dem ersten Schlauchende, ein Formschlussabschnitt gebildet. Ferner weist die Schlauchanordnung ein von Schlauch und Adapter separates Sperrteil auf. Durch Bildung eines Formschlusses zwischen dem Sperrteil und dem Formschlussabschnitt ist der Adapter gegen Trennen vom Schlauch gesichert oder sicherbar.

Die vorschlagsgemäße Ausbildung der Schlauchanordnung ermöglicht eine besonders einfache und/oder kostengünstige Herstellung, bei der insbesondere der Schlauch auch für unterschiedliche Anschlussgeometrien gleich ausgebildet sein kann. Durch den vorschlagsgemäßen Adapter lässt sich der Schlauch dann an die jeweilige Anschlussgeometrie anpassen bzw. adaptieren. Es müssen also für unterschiedliche Anschlussgeometrien nur unterschiedliche Adapter bereitgestellt werden, während der Schlauch keiner Modifikation bedarf. Es kann somit der gleiche Schlauch für unterschiedliche Anschlussgeometrien verwendet werden. Dies ist einer universell einsetzbaren Schlauchanordnung zuträglich.

Ferner erlaubt die vorschlagsgemäße Ausbildung der Schlauchanordnung eine einfache und/oder kostengünstige Sicherung bzw. Befestigung des Adapters am Schlauchende, bei der insbesondere kein Verpressen des Schlauchendes auf den Adapter notwendig ist. Insbesondere wird so ein optimales Strömungsverhalten der Schlauchanordnung auch im Bereich des Schlauchendes bzw. Adapters ermöglicht.

Das Sperrteil ist vorzugsweise als Sperrriegel oder Sperrscheibe ausgebildet und/oder in den Formschlussabschnitt einschiebbar oder eingeschoben. Dies ist einer besonders einfachen Konstruktion der Schlauchanordnung und/oder einer besonders einfachen Sicherung bzw. Befestigung des Adapters am Schlauchende zuträglich.

Vorzugsweise ist der Formschlussabschnitt als eine Nut ausgebildet oder formt eine Nut. Vorzugsweise greift das Sperrteil zur Sicherung des Adapters in den Formschlussabschnitt bzw. die Nut ein oder ist hierzu ausgebildet. Alternativ oder zusätzlich kann der Formschlussabschnitt eine Schulter aufweisen oder bilden, die von dem Sperrteil hintergriffen oder hintergreifbar ist. Durch den Eingriff bzw. Hintergriff des Sperrteils wird vorzugsweise ein Trennen des Schlauchs vom Adapter blockiert. Hierdurch wird in besonders einfacher Weise der Formschluss realisiert.

Der Adapter ist vorzugsweise lösbar am Schlauch bzw. ersten Schlauchende gesichert oder sicherbar. Insbesondere kann der Adapter durch Lösen des Formschlusses bzw. Entfernen des Sperrteils wieder vom Schlauchende gelöst werden. Auf diese Weise ist es möglich, den Schlauch bzw. die Schlauchanordnung bedarfsweise auf eine andere Anschlussgeometrie zu adaptieren. Dies ermöglicht eine universell einsetzbare Schlauchanordnung.

Der Adapter weist vorzugsweise einen Befestigungsabschnitt auf. Über den Befestigungsabschnitt kann die Schlauchanordnung vorzugsweise mit einem korrespondierenden Anschlussteil, insbesondere eines Abnehmers oder einer Wasserversorgung, verbunden werden.

Der Befestigungsabschnitt des Adapters kann zur direkten Verbindung mit dem korrespondierenden Anschlussteil, beispielsweise als Gewinde, oder zur indirekten Verbindung ausgebildet sein, beispielsweise eine Schulter für ein Spannelement, insbesondere eine Überwurfmutter, aufweisen.

Besonders bevorzugt bildet der Adapter und/oder der Befestigungsabschnitt, optional zusammen mit dem Spannelement, ein Anschlussstück bzw. Anschlussfitting.

Unter einem "Abnehmer" im Sinne der vorliegenden Erfindung ist vorzugsweise eine Vorrichtung zu verstehen, der über die Schlauchanordnung Wasser zuleitbar ist bzw. die der Schlauchanordnung Wasser abnimmt. Hierbei kann es sich beispielsweise um eine Geschirr- und/oder eine Waschmaschine handeln.

Besonders bevorzugt ist der Abnehmer eine Armatur, insbesondere eine Sanitärarmatur. Hierunter ist eine fest installierte oder bewegliche konstruktive Einrichtung zu verstehen, die zur bedarfsweisen Wasserentnahme ausgebildet ist, beispielsweise im Haushaltsbereich. Beispiele für Sanitärarmaturen sind Waschtischarmaturen, Duscharmaturen und/oder Küchenarmaturen, besonders bevorzugt Spültischarmaturen. Ein Beispiel für eine fest installierte Armatur ist ein Wasserhahn, ein Beispiel für eine bewegliche Armatur eine Handbrause.

Es ist jedoch auch möglich, dass die Schlauchanordnung einen Teil einer Armatur bildet, beispielsweise (fest) in einem Wasserhahn verbaut ist. Ein weiteres Beispiel für eine solche Armatur ist eine Handbrause, insbesondere eine Duschbrause und/oder eine Küchenbrause, die einen Brausekopf und die vorschlagsgemäßen Schlauchanordnung aufweist. In diesem Sinne ist der Begriff "Abnehmer" vorzugsweise breit auszulegen und umfasst beispielsweise auch einen Wasserauslauf, wie einen Brausekopf. Auch ist es möglich, dass die Schlauchanordnung selbst einen Wasserauslauf bildet.

Vorzugsweise korrespondiert die Aufnahme des Adapters derart zu dem ersten Schlauchende, dass das erste Schlauchende innerhalb der Aufnahme angeordnet oder anordenbar ist. Insbesondere ist das erste Schlauchende derart angeordnet/anordenbar bzw. aufgenommen/aufnehmbar, dass eine äußere Umfangsfläche des ersten Schlauchendes einer inneren Umfangsfläche des Adapters bzw. der Aufnahme zugewandt ist. Insbesondere ist das Schlauchende in die Aufnahme des Adapters eingesteckt bzw. der Adapter auf das Schlauchende aufgesteckt.

Hierdurch wird vermieden, dass das Schlauchende auf einen Stutzen o. dgl. des Adapters aufgesteckt werden bzw. dass der Adapter teilweise in das Schlauchende eingesteckt werden muss. Dies ist einer besonders einfachen und/oder kostengünstigen Bauweise der Schlauchanordnung, bei der es zu keiner Verengung des Strömungsquerschnitts durch den Adapter kommt, zuträglich.

Besonders bevorzugt weist die Schlauchanordnung bei in dem Adapter aufgenommenen ersten Schlauchende einen minimalen Strömungsquerschnitt auf, der mindestens dem minimalen Strömungsquerschnitt des Schlauchs bzw. des ersten Schlauchendes entspricht.

Unter dem "Strömungsquerschnitt" der Schlauchanordnung bzw. des Schlauchs bzw. des Schlauchendes ist vorzugsweise ein Schnitt quer, insbesondere senkrecht, zur Längserstreckung der Schlauchanordnung bzw. des Schlauchs bzw. des Schlauchendes zu verstehen. Wenn Wasser durch die Schlauchanordnung bzw. den Schlauch fließt bzw. geleitet wird, ist der Strömungsquerschnitt also insbesondere ein Schnitt quer bzw. senkrecht zur Hauptströmungsrichtung des Wassers.

Je nach Ausbildung der Schlauchanordnung bzw. des Schlauchs kann der Strömungsquerschnitt über die Länge der Schlauchanordnung bzw. des Schlauchs variieren. Unter dem "minimalen Strömungsquerschnitt" der Schlauchanordnung bzw. des Schlauchs bzw. des Schlauchendes ist hierbei der flächenmäßig kleinste Strömungsquerschnitt entlang der gesamten Längserstreckung der Schlauchanordnung bzw. des Schlauchs bzw. des Schlauchendes zu verstehen und/oder der Schnitt an der Stelle, wo die Schlauchanordnung bzw. der Schlauch bzw. das Schlauchende den kleinsten Innendurchmesser aufweist.

Zwischen der äußeren Umfangsfläche des ersten Schlauchendes und der inneren Umfangsfläche des Adapters bzw. der Aufnahme ist vorzugsweise eine Dichtung, beispielsweise ein Dichtring, angeordnet oder gebildet. So kann der Adapter auf besonders einfache Weise gegenüber dem Schlauchende abgedichtet werden. Eine Leckage zwischen Schlauch und Adapter wird somit vermieden.

Gemäß einem weiteren Aspekt der vorliegenden Erfindung ist an einem zweiten Schlauchende des Schlauchs, das dem ersten Schlauchende gegenüberliegt, ein Befestigungsabschnitt einstückig mit dem Schlauch gebildet. Über den Befestigungsabschnitt ist das zweite Schlauchende vorzugsweise an einen Abnehmer und/oder eine Wasserversorgung anschließbar.

Der Befestigungsabschnitt des zweiten Schlauchendes kann zur direkten Verbindung mit dem korrespondierenden Anschlussteil, beispielsweise als Gewinde, oder zur indirekten Verbindung ausgebildet sein, beispielsweise eine Schulter für ein Spannelement, insbesondere eine Überwurfmutter, aufweisen.

Besonders bevorzugt bildet das zweite Schlauchende und/oder der Befestigungsabschnitt, optional zusammen mit dem Spannelement, ein Anschlussstück bzw. Anschlussfitting.

In vorteilhafter Weise wird also vom zweiten Schlauchende des Schlauchs ein universeller (zweiter) Befestigungsabschnitt bzw. ein universelles (zweites) Anschlussstück direkt einstückig am Schlauch gebildet, während am ersten Schlauchende mittels des Adapters, je nach Wahl des Adapters, unterschiedliche (erste) Befestigungsabschnitte bzw. Anschlussstücke realisiert werden können.

Die Anschlüsse der Wasserversorgung, beispielsweise von Eckventilen, sind häufig standardisiert, so dass hier keine unterschiedlichen bzw. adaptierbaren Anschlussstücke für die Schlauchanordnung nötig sind. Es ist daher vorteilhaft, das korrespondierende Anschlussstück oder Teile davon direkt einstückig mit dem Schlauch auszubilden. Dies ist einer besonders einfachen und/oder kostengünstigen Bauweise zuträglich.

Andererseits können die Abnehmer, die über die Schlauchanordnung mit der Wasserversorgung verbunden werden sollen, beispielsweise Sanitärarmaturen, sehr unterschiedliche Anschlüsse bzw. Anschlussgeometrien aufweisen, so dass es hier vorteilhaft ist, vorschlagsgemäß einen Adapter zu verwenden.

So kann die Schlauchanordnung bzw. der Schlauch bei einfacher und/oder kostengünstiger Bauweise universell eingesetzt werden, nämlich mit universellem Anschlussstück an dem einen und einem je nach Bedarf adaptierbarem Anschlussstück an dem anderen Schlauchende.

Durch die vorschlagsgemäße Ausbildung ist es vorzugsweise auf besonders einfache Weise möglich, die Schlauchanordnung mit zwei Spannelementen bzw. Überwurfmuttern an den beiden Schlauchenden zu versehen. Vorzugsweise weist das erste Schlauchende selbst keine Schulter o. dgl. auf. Ohne Adapter lassen sich die Spannelemente bzw. Überwurfmuttern also am ersten Schlauchende auf den Schlauch aufziehen. Eine Schulter für eines der Spannelemente ist bereits durch das zweite Schlauchende gebildet. Durch Sichern des Adapters am ersten Schlauchende wird vorzugsweise durch den Adapter eine weitere Schulter für das andere Spannelement gebildet. Insbesondere sind die Spannelemente dann unverlierbar an der Schlauchanordnung bzw. am Schlauch gehalten.

Ein weiterer Aspekt der vorliegenden Erfindung betrifft die Verwendung einer vorschlagsgemäßen Schlauchanordnung in einem trinkwasserführenden System, vorzugsweise in einer oder für eine Sanitärarmatur. Hierdurch können entsprechende Vorteile erzielt werden.

Der Verwendungszweck der vorliegenden Erfindung liegt insbesondere im Sanitärbereich, bzw. die Schlauchanordnung ist insbesondere zur Verwendung im Sanitärbereich geeignet.

Die Schlauchanordnung ist für die Trinkwasserinstallation ausgebildet. Im Zusammenhang mit Anforderungen an Prüfungsrichtlinien für druckfeste und flexible Schlauchleitungen für die Trinkwasserinstallation wird insbesondere auf die DIN EN 13618 und das Arbeitsblatt W 543 des Deutschen Vereins des Gas- und Wasserfaches (DVGW) verwiesen, wobei die dortigen Anforderungen durch die vorschlagsgemäße Schlauchanordnung vorzugsweise vollumfänglich erfüllt werden.

Das Material der Schlauchanordnung bzw. des Schlauchs und/oder Adapters und/oder Sperrteils ist derart ausgewählt, dass die Schlauchanordnung zum Leiten von Trinkwasser geeignet bzw. zugelassen ist. Hierbei darf auf die durch die Vereinigung Kunststoffe im Trinkwasser (KTW) aufgestellten Leitlinien verwiesen werden, wobei die Prüfung vorzugsweise gemäß Arbeitsblatt W 270 der DVGW erfolgt.

Vorzugsweise erfüllt das Material der Schlauchanordnung, insbesondere des Schlauchs, des Adapters und/oder des Sperrteils die Materialzulassungen ACS, DM 174 /2004, Kiwa Water Mark, WRAS, DVGW KTW und/oder DVGW W 270. Unter dem Begriff "Kiwa Water Mark" ist eine toxikologische, mikrobiologische und hygienische Prüfung für wasserführende Systeme zu verstehen, die in den Niederlanden vorgenommen wird. Unter dem Begriff "WRAS" versteht der Fachmann eine mikrobiologische und hygienische Prüfung Großbritanniens für Werkstoffe und Produkte, die mit Trinkwasser in Kontakt stehen. In der französischen Prüfnorm "ACS" sind die Anforderungen an eine hygienische Prüfung von mit Trinkwasser in Kontakt kommenden Werkstoffen definiert. Der Begriff "DVGW KTW" bezeichnet eine deutsche Leitlinie zur hygienischen Beurteilung von organischen Materialien im Kontakt mit Trinkwasser. In Deutschland werden Werkstoffe und Produkte, die in Kontakt mit Trinkwasser stehen, im Hinblick auf die Migration chemischer Substanzen und das Wachstum von Mikroorganismen gemäß der Vorgabe "DVGW W 270" geprüft. In der italienischen Norm "DM 174/2004" sind die gesetzlichen Vorgaben dargelegt über Materialien und Gegenstände, die für die stationäre Sammlung, Behandlung, Bereitstellung und Verteilung von Wasser für den menschlichen Gebrauch verwendet werden können. Durch die Erfüllung der vorgenannten (Prüf-) Normen, Leitlinien und Arbeitsblätter kann die erfindungsgemäße Schlauchanordnung vorzugsweise weltweit in trinkwasserführenden Systemen eingesetzt werden.

Vorzugsweise wird als Material für den Schlauch Polyphenylsulfon (PPSU) verwendet. Dieses Material zeichnet sich insbesondere durch seine hohe Dauertemperaturbeständigkeit von deutlich mehr als 100 °C aus. Aufgrund der geringen Permeabilität für Wasser eignet sich dieser Kunststoff insbesondere für den Einsatz im Sanitär- oder Armaturenbereich. PPSU ist aufgrund seiner hohen Härte als Metallersatz geeignet. Somit wird insbesondere für die Schlauchenden eine hohe Formstabilität erreicht.

Insbesondere ist die Härte von PPSU derart hoch, dass für eine ausreichend hohe Flexibilität des Wasserschlauches eine wellenförmige Gestaltung, vorzugsweise sinusförmig, vorgesehen sein kann.

Es ist jedoch auch möglich, ein anderes Material mit ähnlichen Eigenschaften wie PPSU, insbesondere im Hinblick auf Temperaturbeständigkeit, Härte, Festigkeit, und/oder (Druck-)Stabilität, zu verwenden.

Generell ist das für den Schlauch verwendete Material vorzugsweise ein Hochleistungskunststoff und/oder weist eine, im Vergleich zu Standardkunststoffen, wie Kunststoffen aus der Familie der Polyolefine, erhöhte Temperaturbeständigkeit und/oder mechanische Festigkeit auf.

Der Begriff "Hochleistungskunststoffe" im Sinne der vorliegenden Erfindung bezeichnet vorzugsweise eine Gruppe von Kunststoffen, die sich durch besonders hohe Temperaturbeständigkeit und/oder mechanische Festigkeit auszeichnen, insbesondere wie in RÖMPP Lexikon Chemie, 10. Auflage, 1996-1999, Band 3: H-L definiert. Insbesondere zählen zu den Hochleistungskunststoffen Materialien aus den Familien der Polyarylate, Polyetherimide, Polyetherketone, Polysulfone, Polyphenylensulfide und/oder Polyacrylimide.

Vorzugsweise ist der Schlauch aus einem Kunststoff, der aromatische Strukturen bzw. Aromaten enthält, hergestellt. Besonders bevorzugt wird für den Schlauch ein Material aus der Familie der Polysulfone, beispielsweise Polyarylensulfon (PAS), Polyethersulfon (PES), Polysulfon (PSU) und/oder Polyphenylsulfon (PPSU), verwendet.

Bei geringeren Anforderungen an die Dauertemperaturbeständigkeit sowie die Festigkeit bzw. Druckstabilität des Schlauches können beispielsweise auch Materialien aus der Familie der Polyamide oder Polyolefine, insbesondere Polyamid 12, Polypropylen und/oder Polyethylen, zur Herstellung des Schlauchs verwendet werden.

Weitere Vorteile, Merkmale, Eigenschaften und Aspekte der vorliegenden Erfindung ergeben sich aus den Ansprüchen und der nachfolgenden Beschreibung einer bevorzugten Ausführungsform anhand der Zeichnung. Es zeigt:
- Fig. 1A: eine schematische Darstellung eines wasserführenden Systems mit einer Handbrause;
- Fig. 1B: eine schematische Darstellung eines wasserführenden Systems mit einer Waschmaschine;
- Fig. 2: eine Seitenansicht einer vorschlagsgemäßen Schlauchanordnung;
- Fig. 3: einen schematischen Längsschnitt der in Fig. 2 gezeigten Schlauchanordnung;
- Fig. 4: einen vergrößerten Ausschnitt aus Fig. 3 im Bereich eines ersten Schlauchendes mit einem am Schlauchende gesicherten Adapter;
- Fig. 5: eine schematische perspektivische Darstellung des ersten Schlauchendes mit daran gesichertem Adapter; und
- Fig. 6: einen weiteren vergrößerten Ausschnitt aus Fig. 3 im Bereich eines zweiten Schlauchendes.

In den teilweise nicht maßstabsgerechten, nur schematischen Figuren werden für die gleichen, gleichartige oder ähnliche Bauteile und Komponenten dieselben Bezugszeichen verwendet, wobei sich entsprechende oder vergleichbare Eigenschaften und Vorteile ergeben, auch wenn von einer wiederholten Beschreibung abgesehen wird.

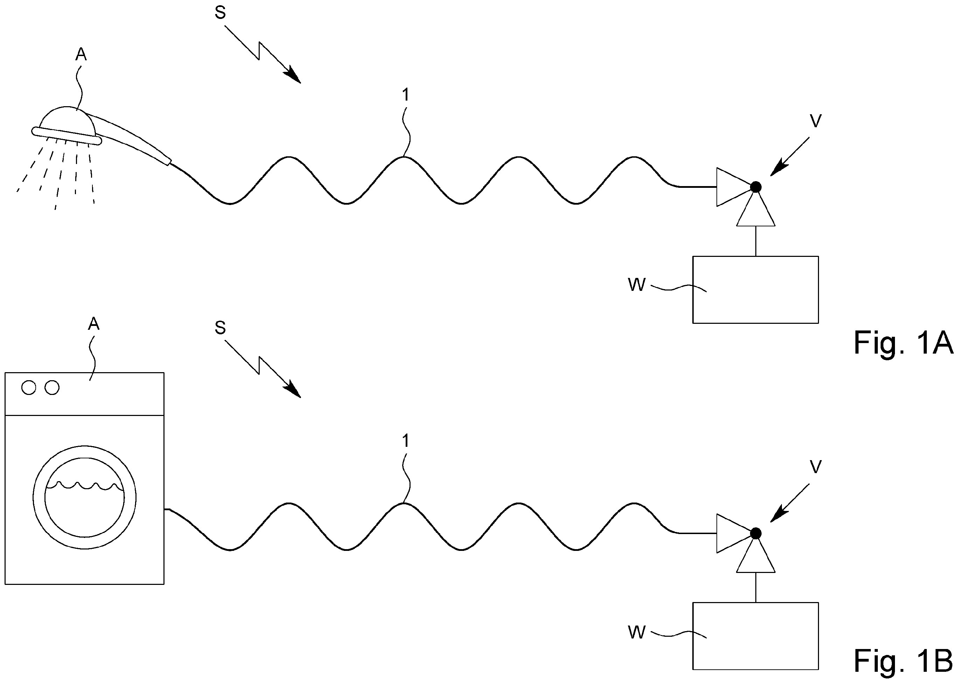

Fig. 1A und 1B zeigen jeweils in einer schematischen Darstellung ein wasserführendes, insbesondere trinkwasserführendes, System S.

Das System S weist eine vorschlagsgemäßen Schlauchanordnung 1 und vorzugsweise einen Abnehmer A, ein Ventil V, insbesondere ein Eckventil, und/oder eine Wasserversorgung W auf.

Die Schlauchanordnung 1 ist zum Anschluss an den Abnehmer A und/oder die Wasserversorgung W, insbesondere das Ventil V, ausgebildet. Insbesondere verbindet die Schlauchanordnung 1 den Abnehmer A mit der Wasserversorgung W bzw. dem Ventil V.

Die Wasserversorgung W ist vorzugsweise eine (Haupt-)Wasserleitung, ein Heizkessel oder dergleichen.

Das Ventil V ist vorzugsweise ein Eckventil, wie in den Fig. 1A und 1B schematisch dargestellt. Grundsätzlich kann das Ventil V jedoch auch anders ausgebildet sein, beispielsweise als Kugelventil.

Der Abnehmer A ist vorzugsweise eine Einrichtung, der über die Schlauchanordnung 1 Wasser, insbesondere von der Wasserversorgung W, zuführbar ist. Besonders bevorzugt handelt es sich bei dem Abnehmer A um eine Armatur, insbesondere eine Sanitärarmatur.

Fig. 1A zeigt beispielhaft eine Handbrause bzw. einen Brausekopf als Abnehmer A. Vorzugsweise bildet die Handbrause bzw. der Brausekopf eine Armatur oder ist Teil einer Armatur.

Besonders bevorzugt bildet die Schlauchanordnung 1 zusammen mit dem Abnehmer A, beispielsweise einem Brausekopf, eine Armatur und/oder eine Handbrause oder einen Teil einer Armatur und/oder Handbrause.

Beim Darstellungsbeispiel gemäß Fig. 1A bildet der Abnehmer A vorzugsweise einen Wasserauslass bzw. -auslauf. Es ist jedoch auch möglich, dass der Abnehmer A eine Einrichtung ist, die mit Wasser versorgt werden soll, beispielsweise eine Waschmaschine oder eine Geschirrspülmaschine. Fig. 1B zeigt beispielhaft den Abnehmer A als Waschmaschine.

Auch ist es möglich, dass die Schlauchanordnung 1 (direkt) einen Wasserauslass bzw. Wasserauslauf bildet. In diesem Fall weist das System S keinen Abnehmer A auf, oder der Abnehmer A ist von der Schlauchanordnung 1 gebildet.

Vorzugsweise ist die Schlauchanordnung 1 und/oder der Abnehmer A in einer Aufnahme (nicht dargestellt) gehalten oder aufgenommen und bei Bedarf zumindest teilweise aus der Aufnahme herausziehbar. Beispielsweise kann die Schlauchanordnung 1 Teil einer Spültischarmatur sein, wobei die Schlauchanordnung 1 an einen Auslauf, insbesondere einen Brausekopf, angeschlossen ist oder einen solchen bildet. Zur Benutzung der Armatur kann die Schlauchanordnung 1 (teilweise) aus der Aufnahme gezogen werden, so dass der Benutzungsradius erhöht werden kann.

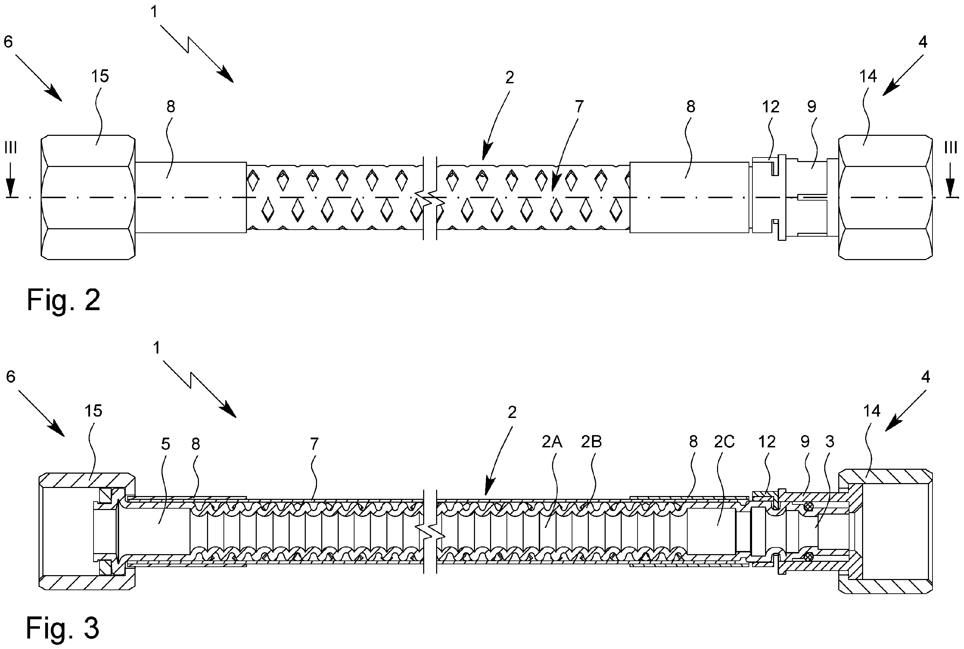

Fig. 2 zeigt in einer schematischen Seitenansicht die Schlauchanordnung 1 in dem bzw. für das (trink)wasserführende System S, insbesondere zur Trinkwasserleitung. Fig. 3 zeigt einen schematischen Längsschnitt der Schlauchanordnung 1 gemäß Fig. 2.

Die Schlauchanordnung 1 weist einen Schlauch 2 mit einem ersten Schlauchende 3, an dem ein erstes Anschlussstück 4 vorgesehen oder gebildet ist, und einem zweiten Schlauchende 5, an dem ein zweites Anschlussstück 6 vorgesehen oder gebildet ist, auf.

Die Anschlussstücke 4, 6 sind zur Verbindung der Schlauchenden 3, 5 mit einem jeweils komplementär ausgebildeten Anschlussteils des Abnehmers A bzw. der Wasserversorgung W, insbesondere des (Eck-)Ventils V, ausgebildet.

Der Schlauch 2 weist einen vorzugsweise gewellten Hauptabschnitt 2A zur Führung eines Wasserstroms, insbesondere eines Trinkwasserstroms, auf. Beim Darstellungsbeispiel bildet der Hauptabschnitt 2A einen Innenschlauch.

Der Schlauch 2 ist vorzugsweise durch eine Schlauchwand 2B gebildet bzw. geformt oder weist eine Schlauchwand 2B auf.

Die Schlauchwand 2B des Schlauchs 2 ist im Bereich des Hauptabschnitts 2A vorzugsweise gewellt bzw. wellenförmig ausgebildet, wie insbesondere im Schnitt gemäß Fig. 3 gezeigt. Die Wellenform ist dabei vorzugsweise sinusförmig oder sinusartig ausgebildet. Diese spezielle Wellenform begünstigt vorzugsweise einen gleichmäßigen strömungsverlustarmen Wasserlauf durch den Hauptabschnitt 2A.

Bei der dargestellten Ausführungsform variiert bzw. fluktuiert - bedingt durch die Wellenform - der Innendurchmesser des Hauptabschnitts 2A periodisch zwischen einem minimalen Durchmesser im Bereich eines nach innen gerichteten Wellenbergs und einem maximalen Durchmesser im Bereich eines nach innen gerichteten Wellentals. Der Außendurchmesser variiert bzw. fluktuiert entsprechend.

Die wellenförmige Ausbildung des Hauptabschnitts 2A bzw. der Schlauchwand 2B erstreckt sich vorzugsweise über die gesamte Länge des Hauptabschnitts 2A.

Durch die wellenförmige Ausbildung wird die Flexibilität bzw. Biegsamkeit der Schlauchanordnung 1 bzw. des Schlauches 2 deutlich verbessert bzw. in Abhängigkeit vom Schlauchmaterial überhaupt erst ermöglicht. Hierdurch wird auch ermöglicht, stabilere Materialien, beispielsweise einen Hochleistungskunststoff und/oder einen Kunststoff aus der Gruppe der Polysulfone, wie Polyphenylsulfon (PPSU), zu verwenden und diesem trotzdem die nötige Flexibilität zu verleihen. Dies ist einer hohen Stabilität der Schlauchanordnung 1 auch bei starker Beanspruchung zuträglich.

Es ist jedoch grundsätzlich auch möglich, den Hauptabschnitt 2A bzw. den Schlauch 2 im Bereich des Hauptabschnitts 2A mit glatter Schlauchwand 2B oder nur teilweise gewellter Schlauchwand 2B auszubilden.

Die Schlauchanordnung 1 bzw. der Schlauch 2 bzw. der Hauptabschnitt 2A weist/weisen vorzugsweise einen mittleren Innendurchmesser von wenigstens 5 mm, vorzugsweise von wenigstens 6 mm, besonders bevorzugt von wenigstens 7 mm und/oder von höchstens 15 mm, vorzugsweise von höchstens 10 mm, besonders bevorzugt von beispielsweise 8 mm auf. Grundsätzlich sind aber auch größere Innendurchmesser nicht ausgeschlossen.

Die Schlauchanordnung 1 bzw. der Schlauch 2 bzw. der Hauptabschnitt 2A oder eine Ummantelung 7, weist/weisen vorzugsweise einen mittleren Außendurchmesser von wenigstens 8 mm, vorzugsweise von wenigstens 9 mm, besonders bevorzugt von wenigstens 10 mm und/oder von höchstens 20 mm, vorzugsweise von höchstens 15 mm, beispielsweise von 13 mm auf.

Die Wanddicke bzw. Wandstärke des Schlauchs 2 bzw. Hauptabschnitts 2A liegt vorzugsweise im Bereich von 0,5 mm bis 5 mm, insbesondere im Bereich von 0,6 mm bis 4 mm, besonders bevorzugt im Bereich von 0,7 mm bis 3 mm, ganz besonders bevorzugt im Bereich von 0,8 mm bis 2 mm. Grundsätzlich sind aber auch größere oder geringere Wanddicken nicht ausgeschlossen.

Die Schlauchenden 3, 5 haben vorzugsweise die gleiche oder eine ähnliche Wanddicke wie der Hauptabschnitt 2A. Es ist jedoch auch möglich, dass die Wanddicken der Schlauchenden 3, 5 von der des Hauptabschnitts 2A unterschiedlich, beispielsweise größer, sind.

Die Schlauchenden 3, 5 bilden vorzugsweise eine wellenfreie Verlängerung des Hauptabschnittes 2A, wobei der Außendurchmesser der Schlauchenden 3, 5 angrenzend zum Hauptabschnitt 2A im Wesentlichen denselben Außendurchmesser wie der Hauptabschnitt 2A aufweist.

Darüber hinaus weisen die Schlauchenden 3, 5 angrenzend zum Hauptabschnitt 2A vorzugsweise einen größeren Innendurchmesser als der Hauptabschnitt 2A auf, sodass eine Erweiterung des Strömungsquerschnitts am Übergang vom Hauptabschnitt 2A zu den Schlauchenden 3, 5 gebildet ist.

Die Schlauchenden 3, 5 sind beim dargestellten Ausführungsbeispiel vorzugsweise vollständig wellenfrei mit vorzugsweise zylindrischer Innenkontur ausgebildet. Der Innendurchmesser der Schlauchenden 3, 5 kann sich dabei in axialer Richtung, also in Richtung der Längserstreckung des Schlauchs 2 bzw. der Schlauchenden 3, 5, ändern.

Besonders bevorzugt ist der Schlauch 2 bzw. der Hauptabschnitt 2A und die Schlauchenden 3, 5 einstückig hergestellt. Dies ist einer besonders einfachen und kostengünstigen Herstellung und Ausbildung des Schlauchs 2 zuträglich. Zudem wird hierdurch die Bildung von Leckagen ausgeschlossen.

Der Schlauch 2 ist vorzugsweise durch Extrusion hergestellt. Insbesondere für lange Schläuche 2 bietet das Extrusionsverfahren den Vorteil, dass die produzierten Schläuche 2 keiner Längenbegrenzung unterliegen. Auch können mit einer Extrusionsanlage Schläuche 2 mit verschiedenen Längen auf einfache Weise hergestellt werden. Es ist aber grundsätzlich auch möglich, den Schlauch 2 durch ein anderes Produktionsverfahren herzustellen.

Besonders bevorzugt sind alle Teile des Schlauchs 2, insbesondere der Hauptabschnitt 2A und die davon unterschiedlichen Schlauchenden 3, 5 des Schlauchs 2, durch Extrusion in einem gemeinsamen Extrusionsprozess hergestellt. Hierdurch wird eine besonders einfache und kostengünstige Herstellung des Schlauchs 2 ermöglicht. Insbesondere ist keine nachgeordnete formgebende bzw. materialabtragende Bearbeitung der Schlauchenden 3, 5 und/oder ein Verbinden der Schlauchenden 3, 5 mit dem Hauptabschnitt 2A notwendig, so dass der Schlauch 2 in wenigen Arbeitsschritten erhältlich ist.

Insbesondere ist es so möglich, die Produktion des Schlauchs 2 im Rahmen eines kontinuierlichen Fertigungsprozesses umzusetzen, also insbesondere mehrere Schläuche 2 hintereinander in einem Endlosprozess herzustellen. Dies ist insbesondere im Rahmen der Serienproduktion vorteilhaft.

Um eine druckfeste Ausbildung der Schlauchanordnung 1 bzw. des Schlauchs 2 zu gewährleisten, ist eine Ummantelung 7, insbesondere ein Edelstahl- oder Polyestergeflecht, vorgesehen. Die Ummantelung 7 erstreckt sich beim dargestellten Ausführungsbeispiel über die gesamte Länge des Hauptabschnittes 2A und erstreckt sich vorzugsweise auch zum Teil über die Schlauchenden 3, 5.

Zur vorzugsweise kraftschlüssigen Verbindung der Ummantelung 7 mit dem Schlauch 1 bzw. mit dem Hauptabschnitt 2A und den Schlauchenden 3, 5 ist an jedem Schlauchende 3, 5 ein Klemmelement 8 in Form einer Presshülse vorgesehen. Die Klemmelemente 8 pressen die Ummantelung 7 umfangseitig gegen den Hauptabschnitt 2A und gegen die Schlauchenden 3, 5. Hierbei geht es lediglich darum, die Ummantelung 7 zu befestigen, und nicht den Schlauch 2 und die Anschlussstücke 4, 6 miteinander zu verbinden.

Es kommt vorzugsweise zu keiner Querschnittsverengung im Bereich des Übergangs zwischen dem Hauptabschnitt 2A und den Schlauchenden 3, 5, so dass eine Beeinträchtigung des Strömungsverhaltens in diesem Bereich nicht auftritt.

Durch den bevorzugten Übergang des vorzugsweise gewellten Hauptabschnitts 2A in die Schlauchenden 3, 5 mit im wesentlichen gleichen Außendurchmesser wird vorzugsweise eine sichere Auflage und/oder Verpressung der Ummantelung 7 mittels des Klemmelements 8 und somit eine knickfreie Ausbildung ermöglicht.

Nicht dargestellt ist, dass die Klemmelemente 8 auch mehrteilig, beispielsweise in Form von zwei Halbschalen, ausgebildet sein können. Darüber hinaus können die Klemmelemente 8 auch jeweils als Wicklung, vorzugsweise Metallwicklung, im Bereich der Schlauchenden 3, 5 vorgesehen sein.

Es ist jedoch auch möglich, die Schlauchanordnung 1 bzw. den Schlauch 2 ohne Ummantelung 7 und entsprechend ohne Klemmelemente 8 auszubilden (nicht dargestellt). Dies ist insbesondere dann vorgesehen, wenn der Schlauch 2 bzw. dessen Schlauchwand 2B aus einem Material hergestellt ist, das bereits eine ausreichende Festigkeit bzw. Druckstabilität aufweist, beispielsweise aus einem Hochleistungskunststoff und/oder einem Kunststoff aus der Gruppe der Polysulfone, insbesondere Polyphenylsulfon (PPSU).

Die maximale Druckbeständigkeit der Schlauchanordnung 1 bzw. des Schlauchs 2 beträgt wenigstens 50 bar, weiter vorzugsweise 60 bar und/oder vorzugsweise höchstens 80 bar. Auf diese Weise kann sichergestellt werden, dass die Schlauchanordnung 1 für alle trinkwasserführenden Systeme S, insbesondere für Systeme S mit einem hohen Wasserdruck, eingesetzt werden kann. Darüber hinaus bietet die Schlauchanordnung dann eine ausreichende Sicherheit gegen ein überdruckbedingtes Aufplatzen, Leckagen oder andere Formen des Materialversagens.

Vorzugsweise weist die Schlauchanordnung 1 bzw. der Schlauch 2 eine maximale Temperaturbeständigkeit von größer oder gleich 90 °C, insbesondere von größer oder gleich 95 °C, weiter vorzugsweise von größer oder gleich 100 °C, besonders bevorzugt von größer oder gleich 160 °C auf, und/oder eine maximale Temperaturbeständigkeit von weniger als 200 °C, insbesondere von weniger als 180 °C. Eine ausreichend hohe Temperaturbeständigkeit der Schlauchanordnung 1 bzw. des Schlauchs 2 lässt ein Durchspülen mit heißem Wasser zu, beispielsweise um Krankheitserreger und Keime abzutöten. Es ist jedoch auch möglich, dass die Schlauchanordnung 1 bzw der Schlauch 2 eine geringere Temperaturbeständigkeit aufweist bzw. Materialien mit geringerer Temperaturbeständigkeit eingesetzt werden.

Vorzugsweise weist die Schlauchanordnung 1 bzw. der Schlauch 2 eine Zugfestigkeit nach DIN EN 1113 von wenigstens 300 N, insbesondere von wenigstens 400 N, besonders bevorzugt von wenigstens 500 N, auf.

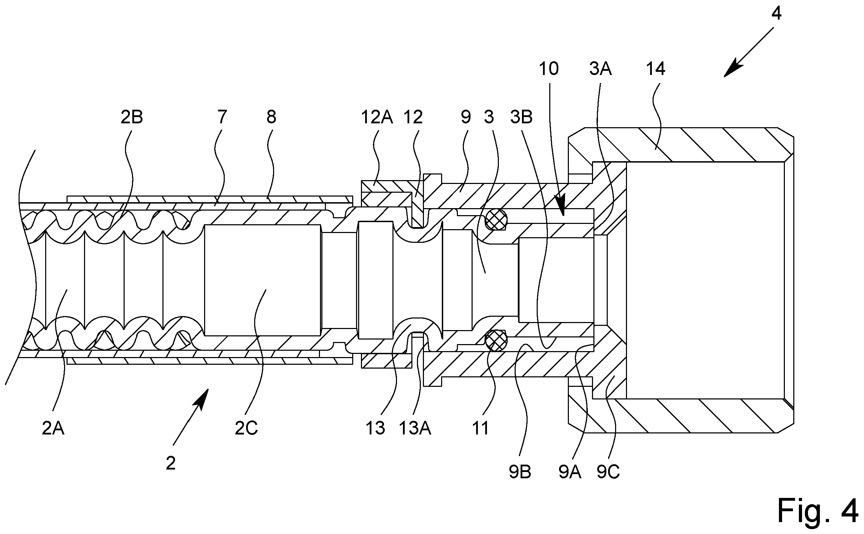

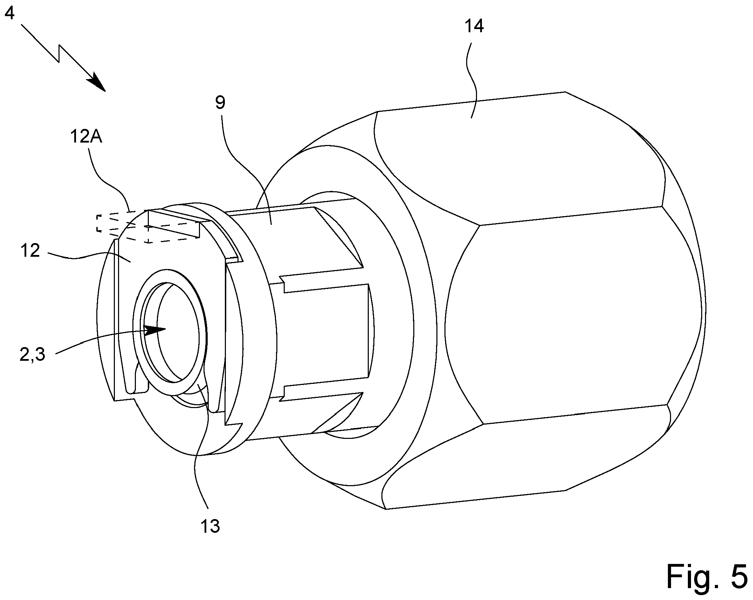

Nachfolgend soll anhand von Fig. 4 und 5 die Schlauchanordnung 1 im Bereich des ersten Schlauchendes 3 bzw. das am Schlauchende 3 gebildete erste Anschlussstück 4 näher erläutert werden. Fig. 4 zeigt eine ausschnittsweise Vergrößerung von Fig. 3 im Bereich des ersten Schlauchendes 3 bzw. ersten Anschlussstücks 4. Fig. 5 zeigt eine perspektivische Darstellung des ersten Schlauchendes 3 bzw. ersten Anschlussstücks 4.

Der Schlauch 2 bzw. das erste Schlauchende 3 bzw. die Schlauchwand 2B weist vorzugsweise eine Stirnfläche bzw. Stirnseite 3A auf. Die Stirnseite 3A ist insbesondere ringförmig ausgebildet und/oder bildet einen Auslass oder Einlass des Schlauchs 2 bzw. ersten Schlauchendes 3.

Die Schlauchanordnung 1 weist einen Adapter 9 auf. Das erste Anschlussstück 4 weist den Adapter 9 auf oder das erste Anschlussstück 4 ist zumindest teilweise vom Adapter 9 gebildet.

Der Adapter 9 ist am ersten Schlauchende 3 angeordnet oder anordenbar.

Vorzugsweise besteht der Adapter 9 aus einem Kunststoffmaterial oder weist ein Kunststoffmaterial auf, beispielsweise aus der Familie der Polyamide, Polyolefine oder Polysulfone, insbesondere Polyamid 12, Polypropylen, Polyethylen und/oder Polyphenylsulfon (PPSU). Vorzugsweise ist der Adapter 9 aus dem gleichen Kunststoffmaterial wie der Schlauch 2 hergestellt.

Besonders bevorzugt ist der Adapter 9 durch ein Spritzgießverfahren hergestellt.

Durch Spritzgießen lässt sich insbesondere eine Vielzahl von Adaptern 9 innerhalb kurzer Zeit kostengünstig herstellen. Gleichzeitig ist eine Nachbearbeitung der Adapter 9 verfahrensbedingt nicht notwendig. Spritzgegossene Bauteile zeichnen sich insbesondere auch durch ihre kostengünstige Herstellung und einen geringen Materialabfall aus. Es ist jedoch auch möglich, den Adapter 9 durch ein anderes Herstellungsverfahren, insbesondere für Kunststoffbauteile, beispielsweise auch einem abtragenden Verfahren, herzustellen.

Der Adapter 9 weist eine Aufnahme 10 für das erste Schlauchende 3 auf oder bildet eine solche Aufnahme 10.

Vorzugsweise ist das erste Schlauchende 3, insbesondere zumindest teilweise oder stirnseitig, in die Aufnahme 10 einführbar/eingeführt, einsteckbar/eingesteckt bzw. aufnehmbar/aufgenommen und/oder ist der Adapter 9 auf das erste Schlauchende 3 bzw. dessen Stirnseite 3A aufsteckbar/aufgesteckt.

Der Adapter 9 bzw. dessen Aufnahme 10 weist vorzugsweise einen Anschlag 9A für den Schlauch 2 bzw. das erste Schlauchende 3 bzw. die Stirnseite 3A auf. Besonders bevorzugt begrenzt der Anschlag 9A die Aufnahme 10 stirnseitig, insbesondere so, dass der Schlauch 2 bzw. das erste Schlauchende 3 nur bis zum Anschlag 9A in die Aufnahme 10 eingeschoben, eingesteckt bzw. aufgenommen werden kann.

Der Anschlag 9A ist vorzugsweise ringförmig ausgebildet und/oder bildet einen Auslass oder Einlass des Adapters 9 bzw. der Schlauchanordnung 1. Insbesondere kann Wasser durch den vom Anschlag 9A gebildeten Einlass bzw. Auslass in den Schlauch 2 hineinströmen bzw. aus dem Schlauch 2 herausströmen, insbesondere über den von der Stirnseite 3A gebildeten Einlass bzw. Auslass des Schlauchs 2.

Der Innendurchmesser bzw. Strömungsquerschnitt des Anschlags 9A ist vorzugsweise größer oder gleich dem Innendurchmesser bzw. dem Strömungsquerschnitt der Stirnseite 3A. Insbesondere kommt es zu keiner Querschnittsverengung des Strömungsquerschnitts der Schlauchanordnung 1 am Übergang zwischen Stirnseite 3A und Anschlag 9A.

Der Adapter 9 bzw. die Aufnahme 10 weist vorzugsweise eine innere Umfangsfläche 9B auf. Besonders bevorzugt ist die Aufnahme 10 zwischen der inneren Umfangsfläche 9B gebildet.

Vorzugsweise ist die Aufnahme 10 durch den Anschlag 9A, insbesondere in axialer Richtung bzw. in Richtung der Längserstreckung des Schlauchanordnung 1, des Schlauchs 2, des ersten Schlauchendes 3 und/oder des Adapters 9, und durch die inneren Umfangsfläche 9B, insbesondere in radialer Richtung bzw. in Richtung quer oder senkrecht zur Längserstreckung des Schlauchanordnung 1, des Schlauchs 2, des ersten Schlauchendes 3 und/oder des Adapters 9, begrenzt oder definiert.

Besonders bevorzugt ist das erste Schlauchende 3 derart in den Adapter 9 bzw. die Aufnahme 10 aufgenommen bzw. aufnehmbar, dass eine äußere Umfangsfläche 3B des Schlauchs 2 bzw. Schlauchendes 3 der inneren Umfangsfläche 9B des Adapters 9 zugewandt ist. Hierbei ist es je nach Bedarf möglich, dass sich die innere Umfangsfläche des Adapters 9 und die äußere Umfangsfläche 3B des Schlauchs 2 bzw. Schlauchendes 3 berühren oder voneinander beabstandet sind. Auch ist es möglich, dass sowohl Bereiche ausgebildet sind, bei denen sich die Umfangsflächen 3B, 9B berühren als auch andere Bereiche, bei denen die Umfangsflächen 3B, 9B voneinander beabstandet sind.

Beim Darstellungsbeispiel gemäß Fig. 4 variiert der Durchmesser der äußeren Umfangsfläche des Schlauchs 2 bzw. Schlauchendes 3 vorzugsweise über die Länge des Schlauchendes 3. Insbesondere ist die äußere Umfangsfläche 3B im vorderen bzw. stirnseitigen Bereich des Schlauchendes 3 von der inneren Umfangsfläche 9B des Adapters 9 beabstandet. Der Schlauch 2 bzw. das erste Schlauchende 3 weist beim Darstellungsbeispiel jedoch vorzugsweise auch eine äußere Umfangsfläche 3B auf, die die innere Umfangsfläche 9B des Adapters 9 berührt (in Fig. 4 direkt hinter der Aufnahmeöffnung der Aufnahme 10). Hier sind jedoch auch andere Lösungen möglich.

Der Adapter 9 bzw. die Aufnahme 10 ist vorzugsweise hohl ausgebildet, insbesondere hohlzylindrisch.

Vorzugsweise ist der Durchmesser der inneren Umfangsfläche 9B konstant oder zumindest im Wesentlichen konstant. Hier sind jedoch auch andere Lösungen möglich. Beispielsweise könnte der Adapter 9 bzw. dessen Aufnahme 10 auch konisch ausgebildet sein, also mit zunehmendem bzw. abnehmendem Durchmesser der inneren Umfangsfläche 9B. Auch ist es möglich, dass der Durchmesser der inneren Umfangsfläche 9B auf andere Art variiert, beispielsweise zunächst abnimmt und dann wieder zunimmt. Auch ist es möglich, dass der Adapter 9 bzw. die innere Umfangsfläche 9B eine oder mehrere Wülste o. dgl. aufweist, bei denen der Durchmesser der inneren Umfangsfläche 9B verringert ist und/oder eine oder mehrere Vertiefungen o. dgl., bei denen der Durchmesser der inneren Umfangsfläche 9B vergrößert ist.

Besonders bevorzugt korrespondiert der Adapter 9 bzw. die Aufnahme 10 zu dem ersten Schlauchende 3, insbesondere korrespondiert die innere Umfangsfläche 9B bzw. deren Durchmesser zumindest im Wesentlichen zu der äußeren Umfangsfläche 3B bzw. deren Durchmesser. Beispielsweise ist bei konisch zulaufendem ersten Schlauchende 3 der Adapter 9 bzw. die Aufnahme 10 auch vorzugsweise zumindest im Wesentlichen konisch ausgebildet.

Besonders bevorzugt ist das erste Schlauchende 3 derart in die Aufnahme 10 des Adapters 9 aufgenommen bzw. aufnehmbar, dass es zu keiner Verengung des Strömungsquerschnitts kommt. Insbesondere wird bzw. ist der Schlauch 2 bzw. das erste Schlauchende 3 bzw. die Schlauchwand 2B nicht zusammengedrückt oder zusammengepresst, wenn der Adapter 9 am ersten Schlauchende 3 angeordnet oder festgelegt wird bzw. ist.

Vorzugsweise entspricht der minimale Strömungsquerschnitt der Schlauchanordnung 1 mit am ersten Schlauchende 3 angeordnetem, festgelegtem bzw. gesicherten Adapter 9 mindestens dem minimalen Strömungsquerschnitt des Schlauchs 2 selbst und/oder der Schlauchanordnung 1 ohne am ersten Schlauchende 3 angeordnetem Adapter 9.

Der Adapter 9 hat vorzugsweise keinen Einfluss auf den minimalen Strömungsquerschnitt der Schlauchanordnung 1 oder des Schlauchs 2 bzw. bewirkt keine Änderung des minimalen Strömungsquerschnitts.

Vorzugsweise ist zwischen dem Adapter 9 bzw. der inneren Umfangsfläche 9B einerseits und dem Schlauch 2 bzw. ersten Schlauchende 3 bzw. der äußeren Umfangsfläche 3B andererseits eine Dichtung 11 geformt oder gebildet. Beim Darstellungsbeispiel gemäß Fig. 4 ist die Dichtung 11 vorzugsweise als Dichtelement, insbesondere als Dichtring, ausgebildet.

Die Dichtung 11 bzw. der Dichtring ist vorzugsweise in einer insbesondere umfangsseitigen Vertiefung bzw. Nut des Schlauchs 2 bzw. ersten Schlauchendes 3 angeordnet oder anordenbar. Hier sind jedoch auch andere Lösungen möglich, beispielsweise könnte die Dichtung 11 auch alternativ oder zusätzlich in einer Vertiefung bzw. Nut des Adapters 9 vorgesehen sein.

Alternativ oder zusätzlich ist es auch möglich, dass direkt zwischen der inneren Umfangsfläche 9B des Adapters 9 und der äußeren Umfangsfläche 3B des ersten Schlauchendes 3 eine Dichtung 11 gebildet ist. Dies kann insbesondere durch eine Presspassung des ersten Schlauchendes 3 im Adapter 9 bzw. der Aufnahme 10 realisiert sein. Insbesondere weist das erste Schlauchende 3 dann eine äußere Umfangsfläche 3B auf, die zumindest teilweise größer als die innere Umfangsfläche 9B des Adapters 9 ist. Vorzugsweise wird bzw. ist jedoch auch bei einer solchen Presspassung der Strömungsquerschnitt des Schlauchs 2 bei Aufnahme in den Adapter 9 nicht oder nur geringfügig verringert.

Alternativ oder zusätzlich zu der umfangsseitigen Dichtung 11 ist es auch möglich, eine stirnseitige Abdichtung vorzusehen. Insbesondere ist dann zwischen der Stirnseite 3A und dem Anschlag 9A eine weitere Dichtung (nicht dargestellt) gebildet. Hierzu kann ein weiteres Dichtungselement, wie ein Dichtring, an der Stirnseite 3A und/oder dem Anschlag 9A vorgesehen sein.

Die Schlauchanordnung 1 weist ein Sperrteil 12 auf.

Das Sperrteil 12 ist separat von Schlauch 2 und Adapter 9 ausgebildet bzw. bildet ein separates Bauteil der Schlauchanordnung 1. Der Schlauch 2, der Adapter 9 und das Sperrteil 12 sind separate Bauteile der Schlauchanordnung 1.

Vorzugsweise bilden der Adapter 9 und das Sperrteil 12 eine Adapteranordnung.

Vorzugsweise besteht das Sperrteil 12 aus Metall oder weist ein Metall auf, beispielsweise Stahl. Es ist jedoch auch möglich, dass das Sperrteil 12 aus einem anderen Material, insbesondere Kunststoff, hergestellt ist oder ein solches aufweist.

Besonders bevorzugt ist das Sperrteil 12 ein Metallblech oder ist aus einem Metallblech hergestellt.

Das Sperrteil 12 ist vorzugsweise am ersten Schlauchende 3 angeordnet oder anordenbar. Vorzugsweise weist das erste Anschlussstück 4 das Sperrteil 12 auf bzw. ist das erste Anschlussstück 4 zumindest teilweise vom Sperrteil 12 gebildet.

Der Adapter 9 ist mittels des Sperrteils 12 am Schlauch 2 bzw. ersten Schlauchende 3 gesichert/sicherbar bzw. gehalten/haltbar bzw. befestigt/befestigbar. Bei gesichertem Adapter 9 ist es nicht möglich, den Adapter 9 vom Schlauch 2 bzw. ersten Schlauchende 3 zu entfernen bzw. zu trennen.

Besonders bevorzugt ist der Adapter 9 durch das Sperrteil 12 am Schlauch 2 bzw. ersten Schlauchende 3 in axialer Richtung bzw. in Längsrichtung, also in Richtung der Längserstreckung der Schlauchanordnung 1, des Schlauchs 2, des ersten Schlauchendes 3 und/oder des Adapters 9, festgelegt bzw. festlegbar. Zusätzlich kann der Adapter 9 auch in radialer Richtung, also in einer Richtung quer oder senkrecht zur Längserstreckung des Schlauchanordnung 1, des Schlauchs 2, des ersten Schlauchendes 3 und/oder des Adapters 9, und/oder gegen Rotieren festgelegt bzw. festlegbar sein. Dies ist jedoch nur optional. Es ist also möglich, dass der Adapter 9 nur in axialer Richtung festgelegt und/oder unverlierbar am Schlauch 2 bzw. ersten Schlauchende 3 gesichert bzw. gehalten ist, sich aber noch relativ zum Schlauch 2 bzw. ersten Schlauchende 3 drehen kann.

Der Schlauch 2 bzw. das erste Schlauchende 3 weist einen Formschlussabschnitt 13 auf oder bildet einen solchen. Der Formschlussabschnitt 13 ist insbesondere im oder am ersten Schlauchende 3, besonders bevorzugt einstückig mit dem ersten Schlauchende 3, geformt oder gebildet, insbesondere von der Schlauchwand 2B.

Besonders bevorzugt korrespondiert der Formschlussabschnitt 13 zum Sperrteil 12.

Der Formschlussabschnitt 13 verläuft vorzugsweise umfangsseitig um den Schlauch 2 bzw. das erste Schlauchende 3, insbesondere über den vollen Umfang. Hier sind jedoch auch andere Lösungen möglich, insbesondere ein Formschlussabschnitt 13, der sich nur teilweise über den Umfang des Schlauchs 2 bzw. ersten Schlauchendes 3 erstreckt, beispielsweise nur über den halben Umfang.

Das Sperrteil 12 bildet mit dem Formschlussabschnitt 13 einen Formschluss oder ist hierzu ausgebildet. Der Adapter 9 ist durch den Formschluss am ersten Schlauchende 3 gesichert bzw. sicherbar. Vorzugsweise ist der Adapter 9 durch den Formschluss am ersten Schlauchende 3 in axialer Richtung bzw. Längsrichtung festgelegt bzw. festlegbar. Besonders bevorzugt blockiert das Sperrteil 12 ein Bewegen des Adapters 9 in axialer Richtung bzw. Längsrichtung oder ist hierzu ausgebildet.

Beim Darstellungsbeispiel gemäß den Fig. 4 und 5 ist der Formschlussabschnitt 13 vorzugsweise als eine Vertiefung oder Nut im ersten Schlauchende 3 bzw. Schlauch 2 gebildet. Insbesondere ist der Formschlussabschnitt 13 von oder in der Schlauchwand 2B gebildet. Vorzugsweise entspricht die Dicke der Schlauchwand 2B im Bereich des Formschlussabschnitts 13 zumindest im Wesentlichen der Wanddicke außerhalb des Formschlussabschnitts 13, wie in Fig. 4 dargestellt.

Besonders bevorzugt bildet der Formschlussabschnitt 13 eine Schulter 13A oder weist eine solche auf. Beim Darstellungsbeispiel gemäß Fig. 4 und 5 ist hier die Schulter 13A insbesondere durch eine Seite der Nut gebildet. Hier sind jedoch auch andere Lösungen möglich, beispielsweise kann der Formschlussabschnitt 13 auch als eine Stufe der Schlauchwand 2B ausgebildet sein, so dass eine entsprechende Schulter 13A gebildet wird.

Besonders bevorzugt greift das Sperrteil 12 in den Formschlussabschnitt 13 ein und/oder hintergreift den Formschlussabschnitt 13 und/oder die Schulter 13A bzw. ist hierzu ausgebildet. Über den Eingriff und/oder Hintergriff wird bzw. ist vorzugsweise der Formschluss hergestellt. Auch ist es möglich, dass das Sperrteil 12 gegen die Schulter 13A gespannt oder spannbar ist.

Das Sperrteil 12 ist vorzugsweise zumindest im Wesentlichen flach, plattenförmig und/oder scheibenförmig ausgebildet.

Das Sperrteil 12 ist besonders bevorzugt als Sperrplatte oder Sperrscheibe ausgebildet, wie insbesondere in Fig. 5 dargestellt. Fig. 5 ist hierbei eine perspektivische Darstellung, bei der der Schlauch 2 bzw. das erste Schlauchende 3 direkt hinter dem Sperrteil 12 geschnitten ist.

Es sind jedoch auch Lösungen möglich, bei denen das Sperrteil 12 stangenförmig und/oder als Sperrriegel o. dgl. ausgebildet ist.

Beim Darstellungsbeispiel gemäß Fig. 5 ist das Sperrteil 12 vorzugsweise zumindest im Wesentlichen U-förmig.

Das Sperrteil 12 kann vorzugsweise quer, insbesondere senkrecht, zur Längserstreckung des Schlauchs 2 bzw. ersten Schlauchendes 3 in den Formschlussabschnitt 13 eingeschoben bzw. auf den Formschlussabschnitt 13 aufgeschoben werden.

Vorzugsweise ist das Sperrteil 12 unbeweglich im Formschlussabschnitt 13 gehalten. Beim Darstellungsbeispiel gemäß Fig. 5 weist der Adapter 9 hierzu vorzugsweise zwei Vorsprünge auf, die das Sperrteil 12 seitlich blockieren.

Besonders bevorzugt ist der Adapter 9 lösbar am Schlauch 2 bzw. ersten Schlauchende 3 gesichert bzw. sicherbar und/oder der Formschluss 13 zwischen Sperrteil 12 und Formschlussabschnitt 13 reversibel und/oder das Sperrteil 12 entfernbar. Es sind jedoch auch Lösungen möglich, bei denen der Adapter 9 unlösbar am Schlauch 2 bzw. ersten Schlauchende 3 gehalten bzw. gesichert ist und/oder bei denen der Formschluss irreversibel ist und/oder bei dem das Sperrteil 12 nach Eingehen des Formschlusses nicht mehr entfernt werden kann.

Das Sperrteil 12 kann optional einen Vorsprung 12A aufweisen, der sich quer, insbesondere senkrecht, zur Haupterstreckungsebene des Sperrteils 12 bzw. in Längserstreckung der Schlauchanordnung 1 erstreckt (in Fig. 5 ist der Vorsprung 12A gestrichelt dargestellt, da er eigentlich erst hinter dem in Fig. 5 dargestellten Schnitt liegt).

Der Vorsprung 12A ermöglicht oder erleichtert vorzugsweise ein Herausziehen bzw. Entfernen des Sperrteils 12 und/oder sorgt für eine zusätzliche Stabilität bzw. Halterung des Sperrteils 12 im Formschlussabschnitt 13.

Vorzugsweise ist der Schlauch 2 bzw. dessen erstes Schlauchende 3 bis zum Formschlussabschnitt 13 in die Aufnahme 10 des Adapters 9 eingeschoben/einschiebbar, eingesteckt/einsteckbar bzw. aufgenommen/aufnehmbar. Der Formschlussabschnitt 13 ist vorzugsweise außerhalb der Aufnahme 10 angeordnet bzw. anordenbar, besonders bevorzugt unmittelbar bzw. direkt hinter der Aufnahme 10.

Die Längserstreckung der Aufnahme 10 entspricht vorzugsweise zumindest im Wesentlichen der Längserstreckung des Schlauchendes 3 vom Formschlussabschnitt 13 zur Stirnseite 3A.

Beim Darstellungsbeispiel schließt sich an den gewellten Hauptabschnitt 2A zunächst ein zumindest im Wesentlichen flacher bzw. glatter Schlauchabschnitt 2C an, an den sich wiederum der Formschlussabschnitt 13 anschließt. Bei der dargestellten Ausführungsform ist dies vorteilhaft, da so die Ummantelung 7 bzw. das Klemmelement 8 an dem glatten Abschnitt 2C anliegen kann. Der Formschlussabschnitt 13 ist dann erst dort gebildet, wo der Schlauch 2 bzw. das erste Schlauchende 3 nicht mehr ummantelt ist.

Hier sind jedoch auch andere Lösungen möglich, insbesondere bei einem Schlauch 2 ohne Ummantelung 7. Hier kann auf den glatten Schlauchabschnitt 2C verzichtet werden und der Formschlussabschnitt 13 kann sich direkt an den Hauptabschnitt 2A anschließen. Auch ist es möglich, dass der Formschlussabschnitt 13 von einer Welle des Hauptabschnitts 2A, beispielsweise der letzten Welle des Hauptabschnitts 2A gebildet ist.

Der Adapter 9 weist vorzugsweise einen Befestigungsabschnitt 9C zur Befestigung bzw. zum Anschluss der Schlauchanordnung 1 an einer Wasserversorgung W und/oder, besonders bevorzugt, einem Abnehmer A auf.

Beim Darstellungsbeispiel bildet der Befestigungsabschnitt 9C vorzugsweise eine Schulter bzw. ein Widerlager für ein erstes Spannelement 14 der Schlauchanordnung 1, insbesondere eine Überwurfmutter.

Der Befestigungsabschnitt 9C ist insbesondere umfangsseitig am Adapter 9 gebildet und/oder erstreckt sich in radialer Richtung bzw. quer zur Längserstreckung der Schlauchanordnung 1 bzw. des Schlauchs 2 bzw. des Adapters 9.

Über das Spannelement 14 ist die Schlauchanordnung 1 vorzugsweise an ein korrespondierendes Anschlussteil einer Wasserversorgung W und/oder, besonders bevorzugt, eines Abnehmers A anschließbar. Vorzugsweise weist das Spannelement 14 hierzu ein Innengewinde auf, insbesondere für ein korrespondierendes Außengewinde des korrespondierenden Anschlussteils.

Besonders bevorzugt ist das erste Anschlussstück 4 durch den Adapter 9 mit dem Spannelement 14 gebildet bzw. weist das erste Anschlussstück 4 den Adapter 9 und das Spannelement 14 auf.

Das Spannelement 14 ist vorzugsweise unverlierbar an der Schlauchanordnung 1 bzw. dem Schlauch 2 gehalten.

Besonders bevorzugt wird das Spannelement 14 auf den Schlauch 2 gezogen, bevor der Adapter 9 am ersten Schlauchende 3 angeordnet wird. Hierzu weist das Spannelement 14 vorzugsweise eine Öffnung mit einem größeren Durchmesser als der Schlauch 2 bzw. das erste Schlauchende 3 auf. Anschließend wird dann der Adapter 9 am ersten Schlauchende 3 angeordnet und gesichert, insbesondere mittels des Sperrteils 12.

Die vom Befestigungsabschnitt 9C des Adapters 9 gebildete Schulter hat vorzugsweise einen größeren Durchmesser als die Öffnung des Spannelements 14, so dass das Spannelement 14 nicht (mehr) vom ersten Schlauchende 3 gezogen bzw. über das erste Schlauchende 3 von der Schlauchanordnung 1 getrennt werden kann bzw. so dass das Spannelement 14 zum Anschluss mit dem korrespondierenden Anschlussteil gegen den Befestigungsabschnitt 9C gespannt werden kann.

Optional kann das Sperrteil 12 einen Anschlag für das Spannelement 14 bilden, wenn das Sperrteil 12 weit genug radial von der Schlauchanordnung 1 abragt (nicht dargestellt). Auf diese Weise kann verhindert werden, dass das Spannelement 14 über das erste Schlauchende 3 hinaus auf den Schlauch 2 bzw. den Hauptabschnitt 2A rutscht.

Es sind auch Lösungen möglich, bei denen der Adapter 9 bzw. der Befestigungsabschnitt 9C direkt an ein korrespondierendes Anschlussteil anschließbar ist. Beispielsweise kann der Adapter 9 ein Außengewinde aufweisen oder der Befestigungsabschnitt 9C als Außengewinde ausgebildet sein, so dass die Schlauchanordnung 1 in ein korrespondierendes Innengewinde eines korrespondierenden Anschlussteils geschraubt werden kann. Auf das Spannelement 14, insbesondere eine Überwurfmutter, kann in diesem Fall verzichtet werden. Der Adapter 9 bildet dann vorzugsweise das erste Anschlussstück 4.

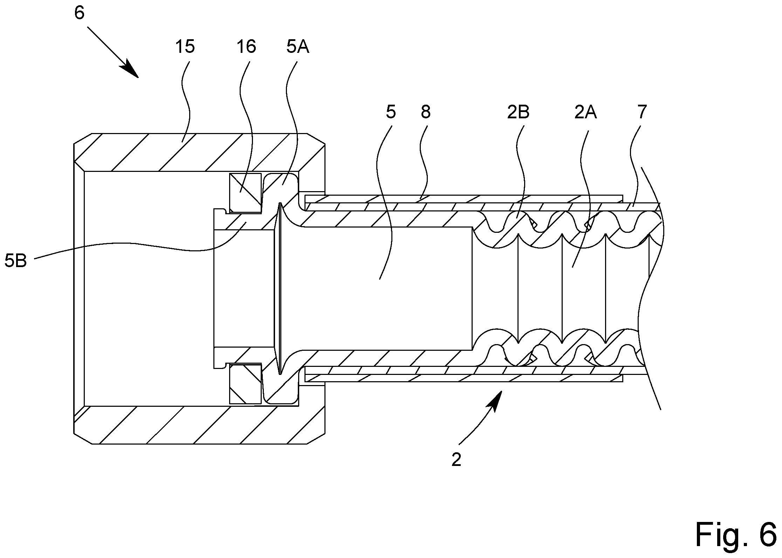

Fig. 6 zeigt einen vergrößerten Ausschnitt der Schlauchanordnung 1 gemäß Fig. 3 im Bereich des zweiten Schlauchendes 5 bzw. zweiten Anschlussstücks 6.

Am zweiten Schlauchende 5 ist ein (zweiter) Befestigungsabschnitt 5A zum Anschluss der Schlauchanordnung 1 an ein korrespondierendes Anschlussteil eines Abnehmers A und/oder, besonders bevorzugt, einer Wasserversorgung W gebildet.

Vorzugsweise ist der Befestigungsabschnitt 5A vom Schlauch 2 bzw. zweiten Schlauchende 5 bzw. der Schlauchwand 2B gebildet oder geformt. Der Befestigungsabschnitt 5A ist einstückig mit dem Schlauch 2 gebildet oder geformt. Vorzugsweise schließt sich der Befestigungsabschnitt 5A einstückig an den Hauptabschnitt 2A des Schlauchs 2 an. Besonders bevorzugt ist der Befestigungsabschnitt 5A in einem gemeinsamen Extrusionsprozess mit dem Hauptabschnitt 2A bzw. Schlauch 2 bzw. zweiten Schlauchende 5 gebildet bzw. geformt.

Beim Darstellungsbeispiel gemäß Fig. 6 ist der Befestigungsabschnitt 5A vorzugsweise als eine Schulter ausgebildet bzw. weist eine Schulter auf. Der Befestigungsabschnitt 5A ist insbesondere umfangsseitig am Schlauch 2 bzw. zweiten Schlauchende 5 gebildet und/oder erstreckt sich in radialer Richtung bzw. quer zur Längserstreckung der Schlauchanordnung 1 bzw. des Schlauchs 2 bzw. des zweiten Schlauchendes 5.

Der Befestigungsabschnitt 5A bildet vorzugsweise eine Schulter bzw. ein Widerlager bzw. einen Anschlag für ein zweites Spannelement 15, insbesondere eine Überwurfmutter.

Über das Spannelement 15 ist die Schlauchanordnung 1 vorzugsweise an ein korrespondierendes Anschlussteil eines Abnehmers A und/oder, besonders bevorzugt, einer Wasserversorgung W anschließbar. Vorzugsweise weist das Spannelement 15 hierzu ein Innengewinde auf, insbesondere für ein korrespondierendes Außengewinde des korrespondierenden Anschlussteils.

Vorzugsweise ist das zweite Anschlussstück 6 durch das zweite Spannelement 15 einerseits und das zweite Schlauchende 5 und/oder den Befestigungsabschnitt 5A andererseits gebildet oder geformt bzw. weist das zweite Anschlussstück 6 das Spannelement 14 einerseits und das zweite Schlauchende 5 und/oder den Befestigungsabschnitt 5A andererseits auf.

Vorzugsweise ist das zweite Anschlussstück 6 oder Teile des Anschlussstücks 6 einstückig mit dem Schlauch 2 gebildet.

Es sind auch Lösungen möglich, bei denen das zweite Schlauchende 5 bzw. der Befestigungsabschnitt 5A direkt mit einem korrespondierenden Anschlussteil verbindbar ist. Beispielsweise kann der Befestigungsabschnitt 5A als Außengewinde für ein entsprechendes Innengewinde des korrespondierenden Anschlussteils ausgebildet sein. Auf das Spannelement 15, insbesondere eine Überwurfmutter, kann in diesem Fall verzichtet werden. Das zweite Schlauchende 5 und/oder der Befestigungsabschnitt 5A bildet dann vorzugsweise das zweite Anschlussstück 6. Insbesondere ist das zweite Anschlussstück 6 dann einstückig mit dem Schlauch 2 gebildet.

Zur stirnseitigen Abdichtung weist das zweite Schlauchende 5 stirnseitig vorzugsweise einen radial umlaufenden Haltebereich und/oder Aufnahmebereich 5B zum Halten und/oder zur Aufnahme eines Dichtungselements 16, vorzugsweise eines Dichtrings, auf. Das Dichtungselement 16 ist vorzugsweise bis zum Befestigungsabschnitt 5A bzw. der hiervon gebildeten Schulter auf den Aufnahmebereich aufschiebbar und/oder aufsteckbar. Zusätzlich oder alternativ kann auch eine radiale Abdichtung vorgesehen sein.

Beim Darstellungsbeispiel sind vorzugsweise zwei Spannelemente 14, 15 vorgesehen. Insbesondere ist ein Befestigungsabschnitt 9C für das erste Spannelement 14 durch den Adapter 9 gebildet, während ein Befestigungsabschnitt 5A für das zweite Spannelement 15 vom zweiten Schlauchende 5 bzw. einstückig mit dem Schlauch 2 gebildet ist.

Vorzugsweise sind die Spannelemente 14, 15 unverlierbar an der Schlauchanordnung 1 bzw. dem Schlauch 2 gehalten, insbesondere zwischen den Befestigungsabschnitten 9C und 5A.

Die Spannelemente 14, 15 werden besonders bevorzugt beide über das erste Schlauchende 3 auf den Schlauch 2 gezogen und anschließend der Adapter 9 am ersten Schlauchende 3 angeordnet bzw. gesichert, so dass an beiden Schlauchenden 3, 5 ein Befestigungsabschnitt 9C, 5A gebildet ist.

Beim Darstellungsbeispiel sind die Spannelemente 14, 15 gleichartig ausgebildet. Es ist jedoch, je nach Bedarf, möglich, dass die Spannelement 14, 15 unterschiedlich ausgebildet sind, beispielsweise unterschiedliche Innendurchmesser aufweisen, unterschiedliche Innengewinde aufweisen o. dgl.

Auch ist es möglich, dass nur an einem Schlauchende 3, 5 bzw. Anschlussstück 4, 6 ein Sperrelement 14, 15 vorgesehen ist. An dem anderen Schlauchende 5, 3 bzw. Anschlussstück 6, 4 ist dann vorzugsweise der entsprechende Befestigungsabschnitt 5A, 9C direkt zum Anschluss ausgebildet, beispielsweise als Gewinde.

Vorzugsweise sind die Schlauchenden 3, 5 bzw. Anschlussstücke 4, 6 der Schlauchanordnung 1 unterschiedlich ausgebildet, wie zuvor beschrieben. Insbesondere weist das zweite Schlauchende 5 bzw. Anschlussstück 6 vorzugsweise keinen Adapter 9 auf.

Es sind jedoch auch Lösungen möglich, bei denen die Schlauchanordnung 1 an beiden Schlauchenden 3, 5 einen Adapter 9 aufweist. Das zweite Schlauchende 5 ist dann vorzugsweise entsprechend zur Verbindung mit einem Adapter 9 ausgebildet, wie zuvor in Bezug auf das erste Schlauchende 3 beschrieben. Je nach Bedarf können hierbei die Adapter 9 am ersten und zweiten Schlauchende 3, 5 gleich oder unterschiedlich ausgebildet sein.

Generell ist die Schlauchanordnung 1 für die Trinkwasserinstallation ausgebildet bzw. dafür geeignet, Trinkwasser zu führen oder mit Trinkwasser in Kontakt zu kommen. Insbesondere erfüllt die Schlauchanordnung 1, insbesondere alle Komponenten der Schlauchanordnung 1, wie der Schlauch 2, der Adapter 9 und das Sperrteil 12, die eingangs genannten Leitlinien und Prüfnormen.

Zu den Komponenten der Schlauchanordnung 1 können auch weitere Elemente bzw. Werkstoffe, beispielsweise Dichtelemente, Klebstoffe, die Ummantelung 7 oder dergleichen gehören.

"Trinkwasser-Installation" im Sinne der vorliegenden Erfindung ist vorzugsweise die Gesamtheit der Rohrleitungen, Armaturen und Apparate, die sich zwischen dem Punkt des Übergangs von Trinkwasser aus einer Wasserversorgungsanlage, beispielsweise Wasserwerken, an den Nutzer und dem Punkt der Entnahme von Trinkwasser befinden.

Unter "Trinkwasser" ist vorzugsweise Wasser für den menschlichen Gebrauch, insbesondere für den Verzehr, zu verstehen.

Die deutsche "Verordnung über die Qualität von Wasser für den menschlichen Gebrauch" (Trinkwasserverordnung) enthält Begriffsbestimmungen sowie Schutzvorschriften für Trinkwasser. Diese stellt eine Umsetzung der EG-Richtlinie 98/83/EG "Über die Qualität von Wasser für den menschlichen Gebrauch" in nationales Recht dar. "Trinkwasser" im Sinne der vorliegenden Erfindung ist vorzugsweise wie in der EG-Richtlinie bzw. deren nationalen Umsetzungen, insbesondere wie in der deutschen Trinkwasserverordnung, definiert.

Trinkwasser ist alles Wasser, das, im ursprünglichen Zustand oder nach Aufbereitung, bestimmt ist zum Trinken, zum Kochen, zur Zubereitung von Speisen und Getränken, zur Körperpflege und -reinigung, zur Reinigung von Gegenständen, die bestimmungsgemäß mit Lebensmitteln in Berührung kommen oder zur Reinigung von Gegenständen, die bestimmungsgemäß nicht nur vorübergehend mit dem menschlichen Körper in Kontakt kommen. Ferner ist Trinkwasser alles Wasser, das in einem Lebensmittelbetrieb verwendet wird für die Herstellung, die Behandlung, die Konservierung oder das Inverkehrbringen von Erzeugnissen oder Substanzen, die für den menschlichen Gebrauch bestimmt sind.

Das Trinkwasser muss so beschaffen sein, dass durch seinen Genuss oder Gebrauch eine Schädigung der menschlichen Gesundheit, insbesondere durch Krankheitserreger, nicht zu besorgen ist. Ferner muss es rein und genusstauglich sein. Insbesondere dürfen in Trinkwasser Krankheitserreger und chemische Stoffe nicht in Konzentrationen enthalten sein, die eine Schädigung der menschlichen Gesundheit besorgen lassen. Konzentrationen von Mikroorganismen und chemischen Stoffen, die das Trinkwasser verunreinigen oder seine Beschaffenheit nachteilig beeinflussen können, sollen so niedrig gehalten werden, wie dies nach den allgemeinen anerkannten Regeln der Technik mit vertretbarem Aufwand unter Berücksichtigung von Einzelfällen möglich ist. Ferner darf Trinkwasser keine Stoffe aufweisen, die ein oder mehrere Radionuklide enthalten, deren Aktivität oder Konzentration unter dem Gesichtspunkt des Strahlenschutzes nicht außer Acht gelassen werden kann.

Insbesondere überschreiten die Mikroorganismen, chemischen Stoffe und radioaktiven Stoffe nicht die in den Anlagen 1-3 der deutschen Trinkwasserverordnung festgelegten Grenzwerte.

Die Schlauchanordnung 1 erfüllt vorzugsweise die "Anforderungen an Anlagen für die Gewinnung, Aufbereitung oder Verteilung von Trinkwasser" gemäß § 17 der deutschen Trinkwasserverordnung. Insbesondere darf die Schlauchanordnung 1 nicht den nach der Trinkwasserverordnung vorgesehenen Schutz der menschlichen Gesundheit unmittelbar oder mittelbar mindern, den Geruch oder den Geschmack des Wassers nachträglich verändern oder Stoffe in Mengen ins Trinkwasser abgeben, die größer sind als dies bei Einhaltung der allgemein anerkannten Regeln der Technik unvermeidbar ist.

Die Komponenten der Schlauchanordnung 1 sind vorzugsweise untereinander und mit dem durchzuleitenden Wasser chemisch kompatibel. Die Komponenten der Schlauchanordnung 1 gehen also vorzugsweise keine chemischen Reaktionen miteinander oder mit Wasser ein. Insbesondere findet keine Korrosion statt und/oder sind die Komponenten der Schlauchanordnung 1 chemisch beständig, behalten insbesondere ihre charakteristischen Eigenschaften trotz beliebig langen Kontakts mit anderen Komponenten der Schlauchanordnung 1 und/oder mit Wasser.

Die mit Wasser für den menschlichen Gebrauch in Kontakt kommenden Komponenten bzw. Werkstoffe der Schlauchanordnung 1, besonders bevorzugt alle Werkstoffe bzw. Komponenten der Schlauchanordnung 1, stellen kein Gesundheitsrisiko dar und rufen vorzugsweise keinerlei Veränderungen des Trinkwassers hinsichtlich seiner Beschaffenheit oder seines Aussehens, Geruchs oder Geschmacks hervor.

Die Prüfung der Schlauchanordnung 1 im Hinblick darauf, dass sie für die Trinkwasserinstallation geeignet ist, insbesondere dass sie den Anforderungen gemäß der Trinkwasserverordnung entspricht, erfolgt vorzugsweise nach den Vorgaben gemäß "DVGW KTW" bzw. "DVGW W 270", besonders bevorzugt nach der "Leitlinie zur hygienischen Beurteilung von organischen Materialien im Kontakt mit Trinkwasser" (KTW-Leitlinie) des deutschen Umweltbundesamtes oder nach der "Bewertungsgrundlage für Kunststoffe und andere organische Materialien im Kontakt mit Trinkwasser" (KTW-BWGL) des deutschen Umweltbundesamtes. Hiernach wird die Schlauchanordnung 1 insbesondere auf Migration von Stoffen und Förderung von mikrobiellem Wachstum geprüft.

Die Prüfung der Schlauchanordnung 1 erfolgt vorzugsweise am fertigen Endprodukt, kann jedoch zusätzlich oder alternativ auch separat für einzelne Komponenten der Schlauchanordnung 1, beispielsweise den Schlauch 2, den Adapter 9 oder das Sperrteil 12, erfolgen.

Die Prüfung der Schlauchanordnung 1 auf Migration von Stoffen erfolgt vorzugsweise durch Befüllen der Schlauchanordnung 1 bzw. des Schlauchs 2 mit (entchlortem) Trinkwasser. Die Prüfung der Schlauchenden 3, 5 und/oder des Adapters 9 und/oder Sperrteils 12 erfolgt vorzugsweise zusätzlich durch Eintauchen in (entchlortes) Trinkwasser. Die dabei entstehenden Wässer werden im Folgenden Migrationswässer genannt.

Die Prüfung erfolgt vorzugsweise sowohl mit Kaltwasser als auch mit Warmwasser und Heißwasser. Kaltwasser ist hierbei vorzugsweise Wasser mit einer Temperatur zwischen 21 °C und 25 °C, insbesondere von 23 °C. Warmwasser ist hierbei vorzugsweise Wasser mit einer Temperatur zwischen 58 °C und 62 °C, insbesondere von 60 °C. Heißwasser ist hierbei vorzugsweise Wasser mit einer Temperatur zwischen 83 °C und 87 °C, insbesondere von 85 °C.

Die Migrationswässer werden vorzugsweise für 10 Tage, besonders bevorzugt für 31 Tage, mit der Schlauchanordnung 1 bzw. deren Komponenten in Kontakt gebracht.

Die Migrationswässer werden auf Migration von Stoffen, insbesondere auf die Parameter Geruch, Trübung, Färbung, Schaumbildung und gesamtorganischer Kohlenstoff (Total Organic Carbon, TOC) untersucht. Die Prüfung erfolgt hierbei vorzugsweise gemäß DIN EN 1420 und/oder DIN EN 12873.

Vorzugsweise werden die in der KTW-Leitlinie bzw. der KTW-Bewertungsgrundlage oder anderen geeigneten Leitlinien bzw. Bewertungsgrundlagen festgelegten Grenzwerte von den Migrationswässern nach 10-tägigem Kontakt, insbesondere nach 31-tägigem Kontakt, mit der Schlauchanordnung 1 bzw. deren Komponenten nicht überschritten.

Besonders bevorzugt lässt sich über den Messzeitraum keine steigende Tendenz der Parameter feststellen.

Die Prüfung hinsichtlich der Förderung des mikrobiellen Wachstums erfolgt vorzugsweise nach DIN EN 16421, insbesondere dem darin beschriebenen Biomasseproduktionspotential-Verfahren (BPP-Verfahren) oder dem volumetrischen Verfahren.

Vorzugsweise weist/weisen die Schlauchanordnung 1 bzw. der Schlauch 2, der Adapter 9 und das Sperrteil 12 in allen untersuchten Prüfperioden nur eine festanhaftende Oberflächenbesiedlung oder einen Oberflächenbewuchs auf, die bzw. der geringer als oder gleich 0,07 ml / 800 cm² ist, insbesondere geringer als oder gleich 0,05 ml / 800 cm² ist.

Vorzugsweise weist/weisen die Schlauchanordnung 1 bzw. deren Komponenten jedoch einen Oberflächenbewuchs bzw. eine Oberflächenbesiedlung größer 0 auf, hat/haben also keine biozide Wirkung auf das Trinkwasser.

### Bezugszeichenliste:

- 1: Schlauchanordnung
- 2: Schlauch
- 2A: Hauptabschnitt
- 2B: Schlauchwand
- 2C: Schlauchabschnitt
- 3: erstes Schlauchende
- 3A: Stirnseite
- 3B: äußere Umfangsfläche
- 4: erstes Anschlussstück
- 5: zweites Schlauchende
- 5A: Befestigungsabschnitt
- 5B: Aufnahmebereich
- 6: zweites Anschlussstück
- 7: Ummantelung
- 8: Klemmelement
- 9: Adapter
- 9A: Anschlag
- 9B: innere Umfangsfläche
- 9C: Befestigungsabschnitt
- 10: Aufnahme
- 11: Dichtung
- 12: Sperrteil
- 12A: Vorsprung
- 13: Formschlussabschnitt
- 13A: Schulter
- 14: erstes Spannelement
- 15: zweites Spannelement
- 16: Dichtungselement

- A: Abnehmer
- S: System
- V: (Eck-)Ventil
- W: Wasserversorgung

## Patentansprüche

1. Schlauchanordnung (1) für ein wasserführendes System (S) zur Trinkwasserleitung in einem trinkwasserführenden System (S),
wobei die Schlauchanordnung (1) einen Schlauch (2) mit einem ersten Schlauchende (3), an dem ein erstes Anschlussstück (4) gebildet ist, und mit einem dem ersten Schlauchende (3) gegenüberliegenden zweiten Schlauchende (5), an dem ein zweites Anschlussstück (6) gebildet ist, aufweist,
wobei die Anschlussstücke (4, 6) zur Verbindung der Schlauchenden (3, 5) mit einem jeweils komplementär ausgebildeten Anschlussteils eines Abnehmers (A) oder einer Wasserversorgung (W) ausgebildet sind,
wobei die Schlauchanordnung (1) einen Adapter (9) mit einer Aufnahme (10) für das erste Schlauchende (3) des Schlauchs (2) aufweist,
wobei das erste Anschlussstück (4) den Adapter (9) aufweist oder zumindest teilweise vom Adapter (9) gebildet ist,
wobei die Schlauchanordnung (1) einen Formschlussabschnitt (13), der vom Schlauch (2) gebildet ist, und ein von Schlauch (2) und Adapter (9) separates Sperrteil (12) aufweist, wobei durch Bildung eines Formschlusses zwischen dem Sperrteil (12) und dem Formschlussabschnitt (13) der Adapter (9) gegen Trennen vom Schlauch (2) gesichert oder sicherbar ist,
wobei an dem zweiten Schlauchende (5) des Schlauchs (2) ein Befestigungsabschnitt (5A) zum Anschluss an einen Abnehmer (A) oder eine Wasserversorgung (W) einstückig mit dem Schlauch (2) gebildet ist, und
wobei die maximale Druckbeständigkeit der Schlauchanordnung (1) wenigstens 50 bar beträgt.

2. Schlauchanordnung nach Anspruch 1, **dadurch gekennzeichnet, dass** das Sperrteil (12) eine Sperrscheibe ist.

3. Schlauchanordnung nach Anspruch 1 oder 2, **dadurch gekennzeichnet, dass** der Formschlussabschnitt (13) eine Nut formt, in die das Sperrteil (12) eingreift oder eingreifbar ist.

4. Schlauchanordnung nach einem der voranstehenden Ansprüche, **dadurch gekennzeichnet, dass** der Formschlussabschnitt (13) eine Schulter aufweist oder bildet, die von dem Sperrteil (12) hintergriffen oder hintergreifbar ist, so dass ein Trennen des Schlauchs (2) vom Adapter (9) blockiert oder blockierbar ist.

5. Schlauchanordnung nach einem der voranstehenden Ansprüche, **dadurch gekennzeichnet, dass** der Adapter (9) lösbar am Schlauch (2) gesichert oder sicherbar ist.

6. Schlauchanordnung nach einem der voranstehenden Ansprüche, **dadurch gekennzeichnet, dass** die Schlauchanordnung (1) bei im Adapter (9) aufgenommenem ersten Schlauchende (3) einen minimalen Strömungsquerschnitt aufweist, der mindestens dem minimalen Strömungsquerschnitt des Schlauchs (2) entspricht.

7. Schlauchanordnung nach einem der voranstehenden Ansprüche, **dadurch gekennzeichnet, dass** eine Dichtung (11) zwischen der äußeren Umfangsfläche (3B) des ersten Schlauchendes (3) und der inneren Umfangsfläche (9B) des Adapters (9) oder dessen Aufnahme (10) angeordnet oder gebildet ist.

8. Schlauchanordnung nach einem der voranstehenden Ansprüche, **dadurch gekennzeichnet, dass** der Adapter (9) einen Befestigungsabschnitt (9C), insbesondere eine Schulter oder ein Gewinde, zum Verbinden, insbesondere mittels einer Spannelements (9) wie einer Überwurfmutter, der Schlauchanordnung (1) mit einem korrespondierenden Anschlussteil bildet.

9. Schlauchanordnung nach einem der voranstehenden Ansprüche, **dadurch gekennzeichnet, dass** der Schlauch (2) aus einem Hochleistungskunststoff und/oder einem Kunststoff aus der Gruppe der Polysulfone, insbesondere Polyphenylsulfon, hergestellt ist.

10. Schlauchanordnung nach einem der voranstehenden Ansprüche, **dadurch gekennzeichnet, dass** die Aufnahme (10) zu dem ersten Schlauchende (3) derart korrespondiert, dass das erste Schlauchende (3) innerhalb der Aufnahme (10) angeordnet oder anordenbar ist und hierbei eine innere Umfangsfläche (9B) der Aufnahme (10) einer äußeren Umfangsfläche (3B) des ersten Schlauchendes (3) zugewandt ist.

11. Verwendung einer Schlauchanordnung (1) gemäß einem der Ansprüche 1 bis 10 in einem trinkwasserführenden System (S), vorzugsweise in einer oder für eine Sanitärarmatur.

## Claims

1. Hose arrangement (1) for a water-carrying system (S) for conveying drinking water in a drinking water-carrying system (S),
wherein the hose assembly (1) comprises a hose (2) having a first hose end (3) at which a first connector (4) is formed, and having a second hose end (5) opposite the first hose end (3) at which a second connector (6) is formed,
the connecting pieces (4, 6) are configured for connecting the hose ends (3, 5) to a respective by complementarily designed connecting part of a consumer (A) or a water supply (W),
wherein the hose assembly (1) comprises an adapter (9) with a receptacle (10) for the first hose end (3) of the hose (2),
wherein the first connector (4) comprises the adapter (9) or is at least partially formed by the adapter (9),
wherein the hose assembly (1) has a positive-locking section (13) formed by the hose (2) and a locking part (12) separate from the hose (2) and adapter (9), wherein the adapter (9) is secured or securable against separation from the hose (2) by forming a positive lock between the locking part (12) and the positive-locking section (13),
wherein at the second hose end (5) of the hose (2), an attachment portion (5A) for connection to a consumer (A) or a water supply (W) is integrally formed with the hose (2), and
wherein the maximum pressure resistance of the hose assembly (1) is at least 50 bar.

2. Hose assembly according to claim 1, **characterized in that** the locking part (12) is a locking disc.

3. Hose assembly according to claim 1 or 2, **characterized in that** the positive-locking section (13) forms a groove in which the locking part (12) engages or is engageable.

4. Hose assembly according to any one of the preceding claims, **characterized in that** the positive-locking section (13) has or forms a shoulder which is engaged or engageable behind by the locking member (12) so that separation of the hose (2) from the adapter (9) is blocked or blockable.

5. Hose assembly according to one of the preceding claims, **characterized in that** the adapter (9) is detachably secured or securable to the hose (2).

6. Hose arrangement according to one of the preceding claims, **characterized in that**, with the first hose end (3) accommodated in the adapter (9), the hose arrangement (1) has a minimum flow cross section which complies with at least the minimum flow cross section of the hose (2).

7. A hose assembly according to any one of the preceding claims, **characterized in that** a seal (11) is arranged or formed between the outer peripheral surface (3B) of the first hose end (3) and the inner peripheral surface (9B) of the adapter (9) or the receptacle (10) thereof.

8. Hose assembly according to one of the preceding claims, **characterized in that** the adapter (9) forms a fastening portion (9C), in particular a shoulder or a thread, for connecting, in particular by means of a clamping element (9) such as a union nut, the hose assembly (1) to a corresponding connecting part.

9. Hose arrangement according to one of the preceding claims, **characterized in that** the hose (2) is made of a high-performance plastic and/or a plastic from the group of polysulfones, in particular polyphenylsulfone.

10. Hose assembly according to any one of the preceding claims, **characterized in that** said receptacle (10) corresponds to said first hose end (3) such that said first hose end (3) is arranged or can be arranged within said receptacle (10), and wherein an inner peripheral surface (9B) of said receptacle (10) faces an outer peripheral surface (3B) of said first hose end (3).

11. Use of a hose arrangement (1) according to any one of claims 1 to 10 in a drinking water-carrying system (S), preferably in or for a sanitary tap and/or fitting.

## Revendications

1. Agencement de tuyau (1) pour un système transportant de l'eau (S) destiné à la conduite d'eau potable dans un système transportant de l'eau potable (S),
l'agencement de tuyau (1) présentant un tuyau (2) doté d'une première extrémité de tuyau (3), sur laquelle est formée une première pièce de raccord (4), et d'une seconde extrémité de tuyau (5) opposée à la première extrémité de tuyau (3), sur laquelle est formée une seconde pièce de raccord (6),
les pièces de raccord (4, 6) étant conçues pour le raccordement des extrémités de tuyau (3, 5) à une pièce de raccord réalisée de manière respectivement complémentaire d'un consommateur (A) ou d'une alimentation en eau (W),
l'agencement de tuyau (1) présentant un adaptateur (9) doté d'un logement (10) pour la première extrémité de tuyau (3) du tuyau (2),
la première pièce de raccord (4) présentant l'adaptateur (9) ou étant au moins partiellement formée par l'adaptateur (9),
l'agencement de tuyau (1) présentant un segment de liaison par complémentarité de forme (13), qui est formé par le tuyau (2), et une pièce de blocage (12) séparée du tuyau (2) et de l'adaptateur (9), l'adaptateur (9) étant ou pouvant être protégé d'une séparation d'avec le tuyau (2) par la formation d'une liaison par complémentarité de forme entre la pièce de blocage (12) et le segment de liaison par complémentarité de forme (13),
un segment de fixation (5A) pour le raccordement à un consommateur (A) ou une alimentation en eau (W) étant formée d'un seul tenant avec le tuyau (2) sur la seconde extrémité de tuyau (5) du tuyau (2), et
la résistance maximale à la pression de l'agencement de tuyau (1) étant d'au moins 50 bar.

2. Agencement de tuyau selon la revendication 1, **caractérisé en ce que** la pièce de blocage (12) est une rondelle de blocage.

3. Agencement de tuyau selon la revendication 1 ou 2, **caractérisé en ce que** le segment de liaison par complémentarité de forme (13) forme une rainure, dans laquelle la pièce de blocage (12) vient ou peut venir en prise.

4. Agencement de tuyau selon l'une des revendications précédentes, **caractérisé en ce que** le segment de liaison par complémentarité de forme (13) présente ou forme un épaulement, à l'arrière duquel la pièce de blocage (12) vient ou peut venir se bloquer, de telle sorte qu'une séparation du tuyau (2) d'avec l'adaptateur (9) est ou peut être bloquée.

5. Agencement de tuyau selon l'une des revendications précédentes, **caractérisé en ce que** l'adaptateur (9) est ou peut être fixé de manière libérable sur le tuyau (2).

6. Agencement de tuyau selon l'une des revendications précédentes, **caractérisé en ce que** l'agencement de tuyau (1) présente, lorsque la première extrémité de tuyau (3) est reçue dans l'adaptateur (9), une section de passage minimale, qui correspond au moins à la section de passage minimale du tuyau (2).

7. Agencement de tuyau selon l'une des revendications précédentes, **caractérisé en ce qu'**un joint d'étanchéité (11) est disposé ou formé entre la surface circonférentielle extérieure (3B) de la première extrémité de tuyau (3) et la surface circonférentielle intérieure (9B) de l'adaptateur (9) ou de son logement (10).

8. Agencement de tuyau selon l'une des revendications précédentes, **caractérisé en ce que** l'adaptateur (9) forme un segment de fixation (9C), en particulier un épaulement ou un filet, pour le raccordement, en particulier au moyen d'un élément de serrage (9) tel qu'un écrou-raccord, de l'agencement de tuyau (1) à une pièce de raccord correspondante.

9. Agencement de tuyau selon l'une des revendications précédentes, **caractérisé en ce que** le tuyau (2) est fabriqué en une matière plastique à haute performance et/ou une matière plastique du groupe des polysulfones, en particulier le polyphénylsulfone.

10. Agencement de tuyau selon l'une des revendications précédentes, **caractérisé en ce que** le logement (10) correspond à la première extrémité de tuyau (3) de telle manière que la première extrémité de tuyau (3) est ou peut être disposée à l'intérieur du logement (10) et qu'une surface circonférentielle intérieure (9B) du logement (10) est alors tournée vers une surface circonférentielle extérieure (3B) de la première extrémité de tuyau (3).

11. Utilisation d'un agencement de tuyau (1) selon l'une des revendications 1 à 10 dans un système transportant de l'eau potable (S), de préférence dans un ou pour un appareil de robinetterie sanitaire.
